# EUROPEAN PATENT APPLICATION

(11) **EP 4 790 516 A1**
(43) Date of publication of application: **12.08.2026**
(21) Application number: 26155592.4
(22) Date of filing: 30.01.2026
(51) Int. Cl.: G06F 1/16, G06F 1/26, G06F 1/3212, H02J 7/54, H02J 7/82

(54) **MULTIPLE ASYMMETRIC BATTERIES ARCHITECTURE FOR HEAD-WEARABLE DEVICES, AND SYSTEMS AND METHODS OF USE THEREOF**

(30) Priority: 10.02.2025 US 202563756794 P
(71) Applicant: Meta Platforms Technologies, LLC, Menlo Park, CA 94025 (US)
(72) Inventor: YU, Xunwei, Menlo Park, 94025 (US); ZHOU, Tiger, Menlo Park, 94025 (US); TATARI, Ali, Menlo Park, 94025 (US); ZHANG, Xiang, Menlo Park, 94025 (US); MA, Junfeng, Menlo Park, 94025 (US); HUANG, Yongcan, Menlo Park, 94025 (US); KROPP, Eugene, Menlo Park, 94025 (US); HARRIS, Andrew, Menlo Park, 94025 (US); WANG, Yang, Menlo Park, 94025 (US); WANG, Yuhao, Menlo Park, 94025 (US); SEGUIN, Chad, Menlo Park, 94025 (US); TANG, Yang An, Menlo Park, 94025 (US); STRAKA, Adrian, Menlo Park, 94025 (US); SHAFI, Hazim, Menlo Park, 94025 (US); BRINDIS, Ulises, Menlo Park, 94025 (US); PEREZ, Luis, Menlo Park, 94025 (US); ZHANG, Zhaonian, Menlo Park, 94025 (US); ZHANG, Qing, Menlo Park, 94025 (US); WEN, Shih Hsien, Menlo Park, 94025 (US)
(74) Representative: Murgitroyd & Company

(57) **Abstract**

A head-wearable device comprising a larger battery, a smaller battery, one or more electronic components, and memory including executable instructions for causing the head-wearable device to perform operations is described. The operations are performed in response to a request to perform a computational task. The operations include, in accordance with a determination that a larger battery charge is above a larger battery charge threshold and a smaller battery charge is above a smaller battery charge threshold, providing power from the larger battery and the smaller battery to the one or more electronic components. The operations further include, in accordance with a determination that the larger battery charge is above the larger battery charge threshold and the smaller battery charge is below the smaller battery charge threshold: (i) deactivating a discharging path of the smaller battery and (ii) providing power from the larger battery to the one or more electronic components.

## Description

### TECHNICAL FIELD

This relates generally to asymmetric multiple battery architecture for head-wearable devices and power management techniques thereof.

### BACKGROUND

Battery designs utilized in most wearable devices, including head-wearable devices, typically make use of symmetric battery designs. As additional electronics are added to smart glasses, XR headsets devices, and other head-wearable devices, space constraints mean that symmetric battery designs will become unsuitable and/or will require designers to sacrifice certain features from these new head-wearable devices. Additionally, as the more power-intensive features are added to such head-wearable devices, periods of peak power consumption can cause brown-outs in the systems of the head-wearable devices and detract from the user experience.

As such, there is a need to address one or more of the above-identified challenges. A brief summary of solutions to the issues noted above are described below.

### SUMMARY

According to a first aspect of the present disclosure there is provided a head-wearable device, comprising: a larger battery; a smaller battery; one or more electronic components; and memory including executable instructions for: in response to a request to perform a computational task: in accordance with a determination that a larger battery charge of the larger battery is above a larger battery charge threshold and a smaller battery charge of the smaller battery is above a smaller battery charge threshold, providing power from the larger battery and the smaller battery to the one or more electronic components while the computational task is performed; and in accordance with a determination that the larger battery charge of the larger battery is above the larger battery charge threshold and the smaller battery charge of the smaller battery is below the smaller battery charge threshold: deactivating a discharging path of the smaller battery; and providing power from the larger battery to the one or more electronic components while the computational task is performed.

In some embodiments, the memory may further include executable instructions for: in accordance with a determination that the larger battery charge of the larger battery is below the larger battery charge threshold and the smaller battery charge of the smaller battery is above the smaller battery charge threshold: deactivating a discharging path of the larger battery; and providing power from the smaller battery to the one or more electronic components while the computational task is performed.

In some embodiments, the memory may further include executable instructions for: after the computational task is performed: in accordance with a determination that the larger battery charge of the larger battery is above a larger battery idle charge threshold, activating a discharging path of the larger battery; in accordance with a determination that the larger battery charge of the larger battery is below the larger battery idle charge threshold, deactivating the discharging path of the larger battery; in accordance with a determination that the smaller battery charge of the smaller battery is above a smaller battery idle charge threshold, activating the discharging path of the smaller battery; and in accordance with a determination that the smaller battery charge of the smaller battery is below the smaller battery idle charge threshold, deactivating the discharging path of the smaller battery.

In some embodiments, the memory may further include executable instructions for: in accordance with a determination that the larger battery charge of the larger battery is below the larger battery charge threshold and the smaller battery charge of the smaller battery is below the smaller battery charge threshold, causing the computational task to not be performed.

In some embodiments, the larger battery charge threshold may be based on one or more of: the computational task; a temperature of the larger battery; and a temperature of the head-wearable device; and the smaller battery charge threshold may be based on one or more of: the computational task; a temperature of the smaller battery; and a temperature of the head-wearable device.

In some embodiments, the memory may further include executable instructions for: in response to a request to perform another computational task, distinct from the computational task: in accordance with a determination that the larger battery charge of the larger battery is above another larger battery charge threshold, distinct from the larger battery charger threshold, and the smaller battery charge of the smaller battery is above another smaller battery charge threshold, distinct from the smaller battery charge threshold, providing power from the larger battery and the smaller battery to the one or more electronic components while the computational task is performed; and in accordance with a determination that the larger battery charge of the larger battery is above the other larger battery charge threshold and the smaller battery charge of the smaller battery is below the other smaller battery charge threshold: deactivating a discharging path of the smaller battery; and providing power from the larger battery to the one or more electronic components while the other computational task is performed.

In some embodiments, the head-wearable device may further comprise: a first charging path regulator, electrically coupled to the larger battery, comprising one or more transistors, wherein the first charging path regulator is configured to activate and deactivate the discharging path of the larger battery; and a second charging path regulator, electrically coupled to the smaller battery, comprising one or more transistors, wherein the second charging path regulator is configured to activate and deactivate the discharging path of the smaller battery.

In some embodiments, the head-wearable device may further comprise: a first temple arm portion; and a second temple arm portion, wherein: the larger battery is configured to be housed within the first temple arm portion, the larger battery having a first shape; the smaller battery is configured to be housed within the second temple arm portion, the smaller battery having a second shape, distinct from the first shape.

In some embodiments, a maximum capacity of the smaller battery may be between 200 mWh and 500 mWh; and a maximum capacity of the larger battery may be between 300 mWh and 1000 mWh.

In some embodiments, the head-wearable device may be one of an XR headset and a pair of smart glasses.

In some embodiments, the one or more electronic components may be at least one of a sensor, a camera, a computing device, a system-on-chip (SOC), a memory storage device, a double data rate synchronous dynamic random-access memory (DDR SRAM), an XR processing device, a display device, an audio device, a communications device, a power management integrated circuit (PMIC), and an audio amplifier circuit.

According to a second aspect of the present disclosure there is provided a non-transitory, computer-readable storage medium including executable instructions that, when executed by one or more processors, cause the one or more processors to: in response to a request to perform a computational task at a head-wearable device including at least a larger battery, a smaller battery, and one or more electronic components: in accordance with a determination that a larger battery charge of the larger battery is above a larger battery charge threshold and a smaller battery charge of the smaller battery is above a smaller battery charge threshold, cause power to be provided from the larger battery and the smaller battery to the one or more electronic components while the computational task is performed; and in accordance with a determination that the larger battery charge of the larger battery is above the larger battery charge threshold and the smaller battery charge of the smaller battery is below the smaller battery charge threshold: cause a discharging path of the smaller battery to be deactivated; and cause power to be provided from the larger battery to the one or more electronic components while the computational task is performed.

In some embodiments, the executable instructions may further cause the one or more processors to: in accordance with a determination that the larger battery charge of the larger battery is below the larger battery charge threshold and the smaller battery charge of the smaller battery is above the smaller battery charge threshold: cause a discharging path of the larger battery to be deactivated; and cause power to be provided from the smaller battery to the one or more electronic components while the computational task is performed.

In some embodiments, the executable instructions may further cause the one or more processors to: after the computational task is performed: in accordance with a determination that the larger battery charge of the larger battery is above a larger battery idle charge threshold, cause a discharging path of the larger battery to be activated; in accordance with a determination that the larger battery charge of the larger battery is below the larger battery idle charge threshold, cause the discharging path of the larger battery to be deactivated; in accordance with a determination that the smaller battery charge of the smaller battery is above a smaller battery idle charge threshold, cause the discharging path of the smaller battery to be activated; and in accordance with a determination that the smaller battery charge of the smaller battery is below the smaller battery idle charge threshold, cause the discharging path of the smaller battery to be deactivated.

In some embodiments, the executable instructions may further cause the one or more processors to: in accordance with a determination that the larger battery charge of the larger battery is below the larger battery charge threshold and the smaller battery charge of the smaller battery is below the smaller battery charge threshold, causing the computational task to not be performed.

In some embodiments, the executable instructions may further cause the one or more processors to: the larger battery charge threshold is based on one or more of: the computational task; a temperature of the larger battery; and a temperature of the head-wearable device; and the smaller battery charge threshold is based on one or more of: the computational task; a temperature of the smaller battery; and a temperature of the head-wearable device.

According to a third aspect of the present disclosure there is provided a method comprising: in response to a request to perform a computational task at a head-wearable device including at least a larger battery, a smaller battery, and one or more electronic components: in accordance with a determination that a larger battery charge of the larger battery is above a larger battery charge threshold and a smaller battery charge of the smaller battery is above a smaller battery charge threshold, providing power from the larger battery and the smaller battery to the one or more electronic components while the computational task is performed; and in accordance with a determination that the larger battery charge of the larger battery is above the larger battery charge threshold and the smaller battery charge of the smaller battery is below the smaller battery charge threshold: deactivating a discharging path of the smaller battery; and providing power from the larger battery to the one or more electronic components while the computational task is performed.

In some embodiments, the method may further comprise: in accordance with a determination that the larger battery charge of the larger battery is below the larger battery charge threshold and the smaller battery charge of the smaller battery is above the smaller battery charge threshold: deactivating a discharging path of the larger battery; and providing power from the smaller battery to the one or more electronic components while the computational task is performed.

In some embodiments, the method may further comprise: after the computational task is performed: in accordance with a determination that the larger battery charge of the larger battery is above a larger battery idle charge threshold, activating a discharging path of the larger battery; in accordance with a determination that the larger battery charge of the larger battery is below the larger battery idle charge threshold, deactivating the discharging path of the larger battery; in accordance with a determination that the smaller battery charge of the smaller battery is above a smaller battery idle charge threshold, activating the discharging path of the smaller battery; and in accordance with a determination that the smaller battery charge of the smaller battery is below the smaller battery idle charge threshold, deactivating the discharging path of the smaller battery.

In some embodiments, the method may further comprise: in accordance with a determination that the larger battery charge of the larger battery is below the larger battery charge threshold and the smaller battery charge of the smaller battery is below the smaller battery charge threshold, causing the computational task to not be performed.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figure 1 illustrates a head-wearable device with batteries and circuits that are configured to be placed within temple arms of the head-wearable device, in accordance with some embodiments.
Figures 2A-2E illustrate a plurality of configurations for placing batteries, circuits, and energy storage devices within temple arms of a head-wearable device, in accordance with some embodiments.
Figure 3 illustrates a cross-charging prevention circuit to prevent a higher-voltage battery from charging a lower-voltage battery, in accordance with some embodiments.
Figures 4A-4B illustrate battery management techniques for managing the use of the two or more batteries to provide power to each of the plurality of electronic components of the head-wearable device, in accordance with some embodiments.
Figure 5A illustrates a flow diagram of a method of providing power from at least one battery of a head-wearable device to at least one electronic component of the head-wearable device, in accordance with some embodiments.
Figure 5B illustrates a flow diagram of a method of providing power from one or more batteries of a head-wearable device based on a power load requirement of a requested computational task, in accordance with some embodiments.
Figure 5C illustrates a flow diagram of a method of providing power from one or more batteries of a head-wearable device based on battery charge thresholds associated with a requested computational task, in accordance with some embodiments.
Figure 5D illustrates a flow diagram of a method of charging two or more batteries of a head-wearable device while preventing one battery from charging another, in accordance with some embodiments.
Figure 5E illustrates a flow diagram of a method of managing cross-charging between two batteries of a head-wearable device, in accordance with some embodiments.
Figures 6A, 6B, and 6C-1 and 6C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

One example of a head-wearable device is described herein. This example head-wearable device may include a first temple arm portion, a second temple arm portion, a first battery configured to be housed within the first temple arm portion, a first battery, a second battery, and memory including executable instructions to be executed by one or more processors. The first battery may be configured to be housed within the first temple arm portion, the first battery has a first shape, the second battery may be configured to be housed within the second temple arm portion, and the second battery has a second shape, distinct from the first shape. The one or more programs include instructions for performing operations. The operations may include, during a first period of time and based on a determination that a capacity of the first battery is sufficient for providing power to an electronic component in the first temple arm portion, providing power from the first battery to the electronic component in the first temple arm portion. The operations may further include, during a second period of time and based on a determination that the capacity of the first battery is not sufficient for providing power to the electronic component in the first temple arm portion, providing power from the first battery and the second battery to the electronic component in the first temple arm portion.

A second example of a head-wearable device is described herein. This example head-wearable device may include a larger battery, a smaller battery, one or more electronic components, and memory including executable instructions for causing the head-wearable device to perform the operations in response to a request to perform a computational task. The operations may include, in accordance with a determination that the computational task is a low-load computational task, causing power to be provided from the larger battery and the smaller battery to the one or more electronic components while the computational task is performed. The operations may further include, in accordance with a determination that the computational task is a high-load computational task: causing a discharging path of the smaller battery to be deactivated and causing power to be provided from the larger battery to the one or more electronic components while the computational task is performed.

A third example of a head-wearable device is described herein. This example head-wearable device may include a larger battery, a smaller battery, one or more electronic components, and memory including executable instructions for causing the head-wearable device to perform operations in response to a request to perform a computational task. The operations may include, in accordance with a determination that a larger battery charge of the larger battery is above a larger battery charge threshold and a smaller battery charge of the smaller battery is above a smaller battery charge threshold, causing power to be provided from the larger battery and the smaller battery to the one or more electronic components while the computational task is performed. The operations may further include, in accordance with a determination that the larger battery charge of the larger battery is above the larger battery charge threshold and the smaller battery charge of the smaller battery is below the smaller battery charge threshold: (i) causing a discharging path of the smaller battery to be deactivated and (ii) causing power to be provided from the larger battery to the one or more electronic components while the computational task is performed.

A fourth example of a head-wearable device is described herein. This example head-wearable device may include a first battery, a second battery, one or more electronic components, and memory including executable instructions for causing the head-wearable device to perform operations in response to the head-wearable device being connected to a charging device. The operations may include, in accordance with a determination that the second battery has a second battery voltage less than or equal to a first battery voltage of the first battery, causing the first battery and the second battery to be charged by the charging device. The operations may further include, in accordance with a determination that the second battery has a second battery voltage greater than the first battery charge of the first battery: (i) causing a discharging path of the second battery to be deactivated and (ii) causing the first battery to be charged by the charging device.

A fifth example of a head-wearable device is described herein. This example head-wearable device may include a first battery, a second battery, one or more electronic components, charging path regulator, electrically coupled to the first battery, comprising at least a charging transistor and a discharging transistor, and memory including executable instructions for causing the head-wearable device to perform operations. The operations may include, in accordance with a determination that the second battery is supplying a cross-charging current to the first battery: (i) causing the charging path regulator to reduce the cross-charging current at the first battery and (ii) causing power to be provided from the second battery to the one or more electronic components.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an extended-reality headset (e.g., a mixed-reality (MR) headset or an augmented-reality (AR) headset as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es) of the AR headset. Throughout this application, the term "extended reality (XR)" is used as a catchall term to cover both ARs and MRs. In addition, this application also uses, at times, a head-wearable device or headset device as a catchall term that covers XR headsets such as AR headsets and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

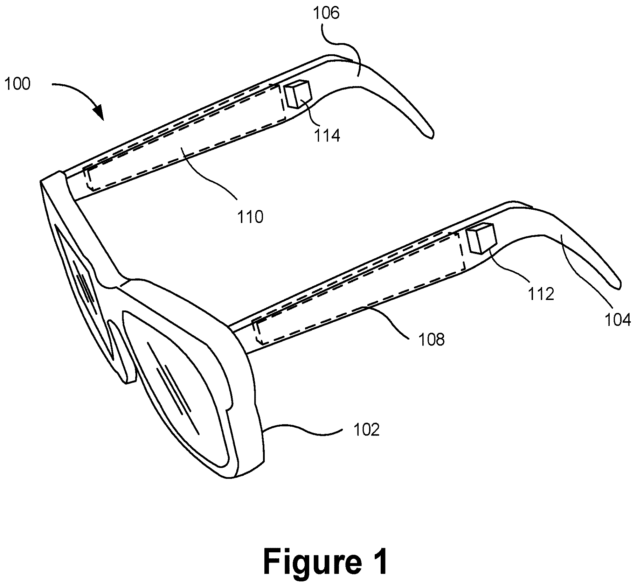

Figure 1 illustrates example batteries 108 and 110 that are configured to be placed within a head-wearable device 100, in accordance with some embodiments. Figure 1 illustrates the head-wearable device 100 including a frame portion 102, a first temple arm 104 and a second temple arm 106, each of which is hingably coupled with the frame portion 102. In some embodiments, the frame portion 102 is coupled to first temple arm 104 and second temple arm 106 by an intermediary component (not pictured). While the embodiments described in reference to Figures 1-2E describe the head-wearable device 100, the same features may be implemented on a variety of other head-wearable devices (e.g., a pair of display-less smart glasses, an extended-reality (XR) headset).

As illustrated in Figure 1, the first temple arm 104 includes a first battery 108 and the second temple arm 106 includes a second battery 110 (e.g., batteries with lithium-ion based chemistry). The first battery 108 is configured and shaped to be housed within the first temple arm 104, and the second battery 110 is configured and shaped to be housed within the second temple arm 106. In some embodiments, the first battery 108 and the second battery 110 are further configured and shaped to maximize their capacity while housed within the head-wearable device 100. In some embodiments, the frame portion 102 includes an additional battery, and the additional battery is configured and shaped to be housed within the frame portion 102. In some embodiments, each respective battery is configured to provide power to a respective electronic component of a plurality of electronic components of the head-wearable device 100. In some embodiments, each respective battery is configured to selectively provide power to each of the plurality of electronic components of the head-wearable device 100. In some embodiments, the first temple arm 104 further includes an energy storage device (e.g., such as a capacitor) configured to selectively provide power to each of the plurality of electronic components of the head-wearable device 100. In some embodiments, the head-wearable device 100 further includes a processing device and/or a system-on-chip (SoC) component to determine a battery or an energy storage device to provide power to each of the plurality of electronic components.

In some embodiments, the first temple arm 104 further includes a first electronic component 112 (e.g., a SoC component, a double data rate synchronous dynamic random-access memory (DDR SDRAM) component, an embedded MultiMediaCard (eMMC), a microcontroller (MCU), an audio amplifier, a WiFi communications component, a Bluetooth communications component, power management integrated circuit (PMIC), a camera component, a display component, an audio speaker component, a microphone component, etc.), and the second temple arm 106 also includes a second electronic component 114. In some embodiments, the first electronic component 112 and/or the second electronic component 114 are electrically coupled to and configured to receive power from one or both of the first battery 108 and the second battery 110. In some embodiments, the first battery 108 and/or the second battery 110 is chamfered and/or curved to accommodate the first electronic component 112 and/or the second electronic component 114, respectively. In some embodiments, the frame portion 102 includes an additional electronic component configured to receive power from one or both of the first battery 108 and the second battery 110. In some embodiments, the placement of the first battery 108, the second battery 110, the first electronic component 112, and/or the second electronic component 114 are configured to counterbalance the additional electronic component located in the frame portion 102, thereby improving the wearing experience.

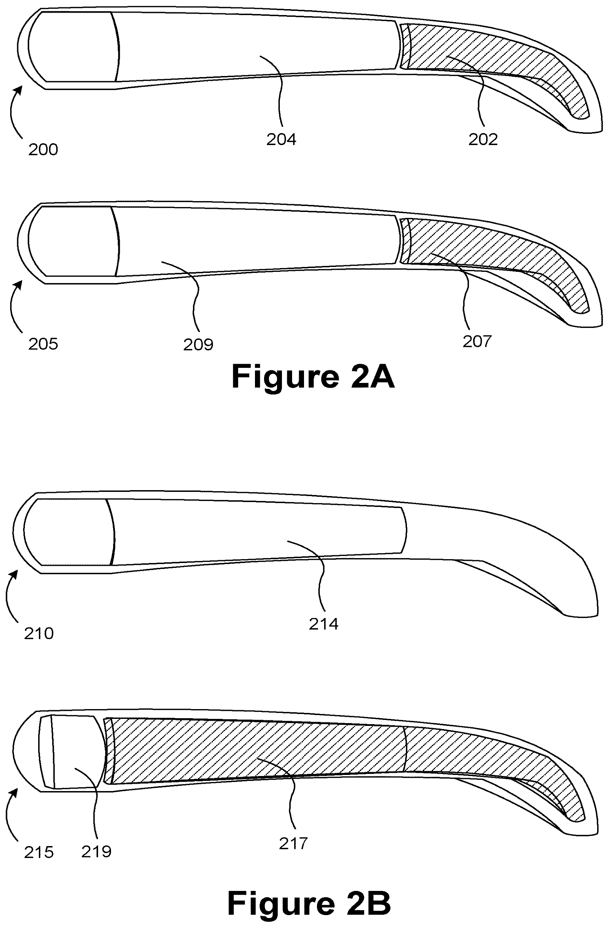

Figures 2A-2E illustrate a plurality configurations of batteries and electronic components in the first temple arm 104 and the second temple arm 106, in accordance with some embodiments. Figure 2A illustrates a symmetric battery configuration, in accordance with some embodiments. In the symmetric battery configuration, the first temple arm 200 (e.g., the first temple arm 104) includes a first electronic component 204 and a first battery 202, and the second temple arm 205 (e.g., the second temple arm 106) includes a second electronic component 209 and a second battery 207. In some embodiments, the first battery 202 and the second battery 207 are configured to provide power to both the first electronic component 204 and the second electronic component 209. In the symmetric battery configuration, the first temple arm 200 and the second temple arm 205 are symmetrical insofar as the first battery 202 and the second battery 207 are the same size (or approximately the same size) and the first electronic component 204 and the second electronic component 209 are the same (or approximately the same size), as illustrated in Figure 2A. In some embodiments, the respective placements, sizes, shapes, and/or weights of the first battery 202 and the first electronic component 204 and/or the second battery 207 and the second electronic component 209 are further configured such that the first temple arm 200 and the second temple arm 205 counter-balance one another, thereby improving the wearing experience.

Figure 2B illustrates a single battery configuration, in accordance with some embodiments. In the single battery configuration, the first temple arm 210 (e.g., the first temple arm 104) includes a first electronic component 214, and the second temple arm 215 (e.g., the second temple arm 106) includes a second electronic component 219 and a battery 217. In some embodiments, the first temple arm 210 does not include a battery. In some embodiments, the battery 217 is configured to provide power to both the first electronic component 214 and the second electronic component 219. In some embodiments, the battery 217 is a large battery (e.g., larger than the first battery 202 and the second battery 207, as illustrated in Figure 2B). In some embodiments, the first electronic component 214 is larger than the second electronic component 219, as illustrated in Figure 2B. In some embodiments, the respective placements, sizes, shapes, and/or weights of the first electronic component 214 and/or the battery 217 and the second electronic component 219 are further configured such that the first temple arm 210 and the second temple arm 215 counterbalance one another, thereby improving the wearing experience.

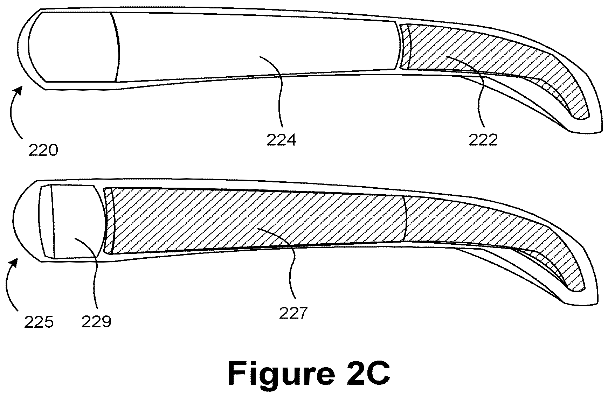

Figure 2C illustrates a dual-asymmetric battery configuration, in accordance with some embodiments. In the dual-asymmetric battery configuration, the first temple arm 220 (e.g., the first temple arm 104) includes a first electronic component 224 and a first battery 222, and the second temple arm 225 (e.g., the second temple arm 106) includes a second electronic component 229 and a second battery 227. In some embodiments, the first battery 222 and the second battery 227 are configured to provide power to both the first electronic component 224 and the second electronic component 229. In some embodiments, the first battery 222 is a small battery (e.g., smaller than the first battery 202 and the second battery 207), and the second battery 227 is a large battery (e.g., larger than the first battery 202 and the second battery 207, as illustrated in Figure 2C). In some embodiments, the first electronic component 224 is larger than the second electronic component 229, as illustrated in Figure 2C. In some embodiments, the respective placements, sizes, shapes, and/or weights of the first battery 222 and the first electronic component 224 and/or the second battery 227 and the second electronic component 229 are further configured such that the first temple arm 220 and the second temple arm 225 counter-balance one another, thereby improving the wearing experience.

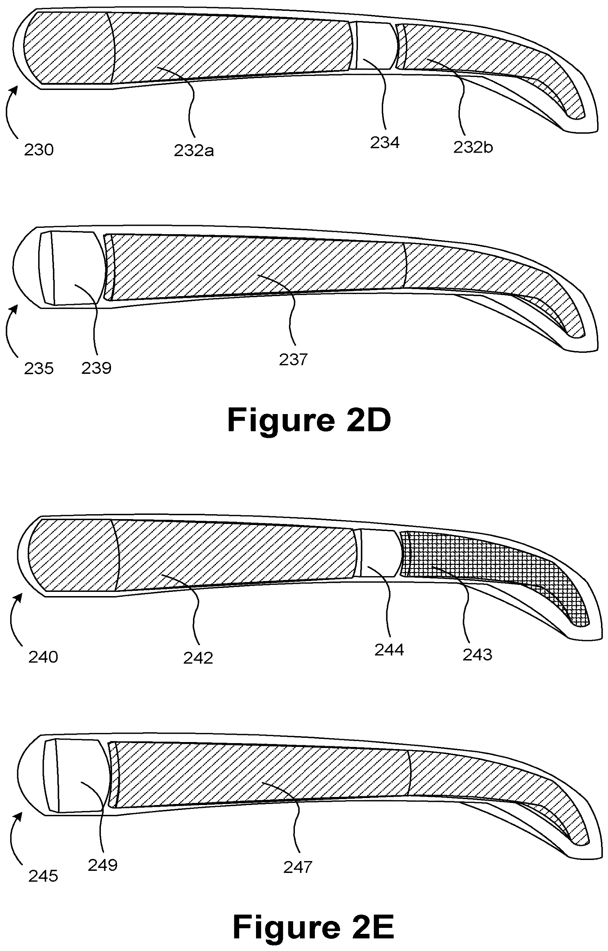

Figure 2D illustrates a multiple-asymmetric battery configuration, in accordance with some embodiments. In the multiple-asymmetric battery configuration, the first temple arm 230 (e.g., the first temple arm 104) includes a first electronic component 234, a first battery 232a, and a second battery 232b, and the second temple arm 235 (e.g., the second temple arm 106) includes a second electronic component 239 and a third battery 227. In some embodiments, the first battery 232a, the second battery 232b, and the third battery 237 are configured to provide power to both the first electronic component 234 and the second electronic component 239. In some embodiments, the first battery 232a and the second battery 232b are small batteries (e.g., smaller than the first battery 202 and the second battery 207), and the third battery 237 is a large battery (e.g., larger than the first battery 202 and the second battery 207, as illustrated in Figure 2D). In some embodiments, the first electronic component 234 is smaller than the second electronic component 229, as illustrated in Figure 2D. In some embodiments, the respective placements, sizes, shapes, and/or weights of the first battery 232a, the second battery sale 232b, and the first electronic component 234 and/or the third battery 237 and the second electronic component 229 are further configured such that the first temple arm 230 and the second temple arm 235 counter-balance one another, thereby improving the wearing experience.

Figure 2E illustrates another asymmetric battery configuration, in accordance with some embodiments. In the other asymmetric battery configuration, the first temple arm 240 (e.g., the first temple arm 104) includes a first electronic component 244, a first battery 242, and an energy storage device 243, and the second temple arm 245 (e.g., the second temple arm 106) includes a second electronic component 249 and a second battery 247. In some embodiments, the first battery 242, the second battery 247, and the energy storage device 243 are configured to provide power to both the first electronic component 244 and the second electronic component 249. In some embodiments, the first battery 232 is a small battery (e.g., smaller than the first battery 202 and the second battery 207), and the second battery 247 is a large battery (e.g., larger than the first battery 202 and the second battery 207, as illustrated in Figure 2E). In some embodiments, the first electronic component 244 is smaller than the second electronic component 249, as illustrated in Figure 2E. In some embodiments, the respective placements, sizes, shapes, and/or weights of the first battery 242, the energy storage device 243, and the first electronic component 234 and/or the second battery 247 and the second electronic component 249 are further configured such that the first temple arm 240 and the second temple arm 245 counter-balance one another, thereby improving the wearing experience.

The head-wearable device 100 is configured to provide power from the plurality of batteries (e.g., the first battery 108, the second battery 110, the additional battery, the first battery 202, etc., described in reference to Figures 1-2E) to the plurality of electronic components (e.g., the first electronic component 112, the second electronic component 114, the additional electronic component, the first electronic component 204, etc., described in reference to Figures 1-2E), in accordance with some embodiments. In some embodiments, a determination to provide power from a respective battery of the plurality of batteries to a respective electronic component of the plurality of electronic components is made by executable instructions stored in memory as executed by a processor of the head-wearable device 100 and/or a processor of another device communicatively coupled to the head-wearable device 100. In some embodiments, the determination is based on which of the plurality of batteries is closest (either physically or electronically) to the respective electronic component. For example, as illustrated in Figure 2E, if the second electronic component 249 requires power, the second battery 247 will be determined to provide power to the second electronic component 249 since the second battery 247 is closer (both physically and electronically) to the second electronic component 249 than the first battery 242. In some embodiments, the determination is based on which of the plurality of batteries has a greater available capacity (e.g., measured in Watt-hours (Wh) and/or Amp-hours (Amp-hr)). For example, as illustrated in Figure 2E, if the second electronic component 249 requires power, the first battery 242 will be determined to provide power to the second electronic component 249 if the first battery 243 has a greater available capacity than the second battery 247. In some embodiments, the respective electronic component of the plurality of electronic components requires more power than a single battery of the plurality of batteries can provide. In such circumstances, a determination to provide power from more than one respective batteries of the plurality of batteries to the respective electronic component of the plurality of electronic components is made by the executable instructions. For example, as illustrated in Figure 2E, if the capacity of the first battery 242 is not sufficient for providing power to the first electronic component 244, the first battery 242 and the second battery 247 will both be determined to provide power the first electronic component 244. In some embodiments, the determination to provide power from the respective battery and/or more than one respective batteries of the plurality of batteries to the respective electronic component of the plurality of electronic components is further based on component information obtained from the plurality of electronic components that indicates respective power needs of the plurality of electronic components, battery information obtained from the plurality of batteries that indicates respective available capacities each of the plurality of batteries, user-specific power management settings, user behavior data, and/or thermal constraints of the plurality of batteries, the plurality of electronic components, the head-wearable device 100, and/or any other components thereof.

In some embodiments, the energy storage device 243 is a high-capacity capacitor (e.g., a supercapacitor, an ultracapacitor, a tantalum capacitor, etc.) and/or another battery. The energy storage device 243 is configured to provide power to the first electronic component 244, the second electronic component 249, and/or any other component of the head-wearable device 100. In some embodiments, the energy storage device 243 is configured to provide power to mitigate risk of power brown-outs caused by voltage spikes and/or transient power-demand spikes of the plurality of electronic components of the head-wearable device 100. Examples where the energy storage device 243 may provide power to mitigate the risk of power brown-outs include (i) recording live video (image data and audio data), (ii) conducting a video call with another user of another device, (iii) transferring large data files via a wireless communications component, (iv) performing calculations for a contextual AI program, and (v) performing visual translations of text captured by a camera of the head-wearable device 100.

The respective capacities of the plurality of batteries (e.g., the first battery 108, the second battery 110, the additional battery, the first battery 202, etc., described in reference to Figures 1-2E) ranges between 100 mWh and 4000 mWh. In some embodiments, a capacity of the large battery is 0.5 to 10 times larger than a capacity of the small battery. In some embodiments, the capacity of the large battery ranges between 250 mWh and 2000 mWh, and the capacity of the small battery ranges between 125 mWh and 1000 mWh.

The use of asymmetric battery configurations may create difficulties while simultaneously charging two or more batteries in the head-wearable device 100, in accordance with some embodiments. In some embodiments, each battery of the two or more batteries has a different battery capacity and/or a different battery cell voltage, a different charging time, a different charging efficiency, and/or different thermal considerations. Thus, a charging voltage is determined based on a headroom value and a voltage of a largest battery of the two or more batteries. In some embodiments, a first battery of the two or more batteries has a first cell voltage that is greater than a second cell voltage of a second battery of the two or more batteries, and the first battery will charge the second battery if a discharging path of the smaller battery is not controlled (cross-charging). Cross-charging can cause unintended power flow from one or more fully-charged batteries to one or more partially-charged batteries which causes unnecessary power loss and unnecessary heat generation at the two or more batteries and/or the plurality of electronic components of the head-wearable device 100. Cross-charging can also cause reduce respective cycle lives of the two or more batteries by causing unnecessary charge and discharge cycles. Additionally, cross-charging can cause trigger an overcurrent protection mechanism of the two or more batteries which can cause an unnecessary shutdown of the head-wearable device 100 and/or damage the two or more batteries and/or the plurality of electronic components. Thus, to prevent cross-charging, the discharging path of the smaller battery can be disabled when the charging voltage is lower than the first cell voltage, and the discharging path of the smaller battery is enabled when the charging voltage is greater than or equal to the first cell voltage.

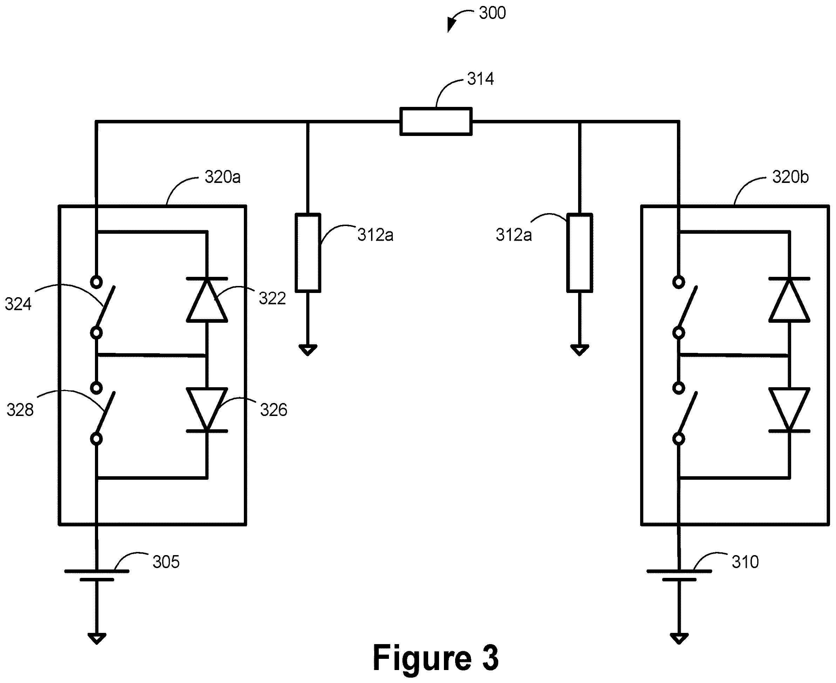

Figure 3 illustrates a cross-charging prevention circuit 300 to prevent a higher-voltage battery 310 from charging a lower-voltage battery 305, in accordance with some embodiments. The higher-voltage battery 310 has a first voltage, and the lower-voltage battery 305 has a second voltage that is less than the first voltage. In some embodiments, the lower-voltage battery 305 has a smaller capacity (e.g., between 125 mWh and 1000 mWh) than a capacity of the higher-voltage battery 310 (between 250 mWh and 2000 mWh). In some embodiments, the cross-charging prevention circuit 300 includes one or more electrical loads 312a-312b (e.g., the plurality of electronic components of the head-wearable device 100) that draw power from the higher-voltage battery 310 and/or the lower-voltage battery 305. In some embodiments, the cross-charging prevention circuit 300 includes one or more line impedances 314 created by one or more wires that electrically couple the one or more electrical loads 312a-312b, the higher-voltage battery 310, and/or the lower-voltage battery 305. The cross-charging prevention circuit 300 further includes a first charging path regulator 320a between the higher-voltage battery 310 and the one or more electrical loads 312a-312b and a second charging path regulator 320a between the lower-voltage 305 and the one or more electrical loads 312a-312b. Each respective charging path regulator includes a charging transistor, represented by a charging switch 324 and a charging body diode 322, and a discharging transistor, represented by a discharging switch 328 and discharging body diode 326. In some embodiments, the charging transistor and the discharging transistor field-effect transmitters (FETs) such as metal-oxide-semiconductor field-effect transmitters (MOSFETs). In some embodiments, the charging transistor and the discharging transistor are controlled by a circuit controller (e.g., the processor of the head-wearable device 100 and/or the processor of another device communicatively coupled to the head-wearable device 100, as described in reference to Figure 1). The circuit controller can determine whether the lower-voltage battery 305 is experiencing cross-charging by monitoring a current supplied to/from the lower-voltage battery 305 and/or a current supplied to/from the higher-voltage battery 310.

While the lower-voltage battery 305 does not have sufficient voltage to provide power to prevent cross-charging, the first charging path regulator 320a can enter a disable mode, a redirect mode, and/or a regulate mode to limit a cross-charging current supplied to the lower-voltage battery 305, in accordance with some embodiments. In the disable mode, the circuit controller turns the charging transistor off, preventing the cross-charging current from being supplied to the lower-voltage battery 305. In the redirect mode, the circuit controller turns the charging transistor on and turns the discharging transistor off. Thus the cross-charging current is limited by a forward voltage of the discharging body diode 326. In the regulate mode, the circuit controller turns the charging transistor on and turns the discharging transistor turned on. Thus, the charging transistor becomes saturated, limiting the cross-charging current to a saturation current of the charging transistor.

In some embodiments, the circuit controller can regulate a discharging current, supplied by the lower-voltage battery 305 and/or the higher-voltage battery 310 to the one or more electrical loads 312a-312b by entering a regulated-discharge mode. In the regulated-discharge mode, the circuit controller turns the charging transistor on and turns the discharging transistor on. Thus, the discharging transistor becomes saturated, limiting the discharging current to a saturation current of the discharging transistor. In some embodiments, the circuit controller determines whether the higher-voltage battery 310 and/or the lower-voltage battery 305 are being charged (e.g., the head-wearable device 100 is coupled to a charging device) before causing the first charging path regulator 320a to enter the disable mode, the redirect mode, and/or the regulate mode. If the higher-voltage battery 310 and/or the lower-voltage battery 305 are being charged, the circuit controller will not cause the first charging path regulator 320a to enter the disable mode, the redirect mode, and/or the regulate mode.

In some embodiments, in response to the determination that the higher-voltage battery 310 and/or the lower-voltage battery 305 of the two or more batteries are being charged (e.g., the head-wearable device 100 is coupled to the charging device), the circuit controller obtains a larger battery voltage of a larger battery (e.g., with a capacity between 250 mWh and 2000 mWh) of the two or more batteries and a smaller battery voltage of a smaller battery (e.g., with a capacity between 125 mWh and 1000 mWh) of the two or more batteries. In some embodiments, an initial charging voltage that is a headroom voltage of the cross-charging prevention circuit 300. In accordance with a determination that the smaller battery voltage is greater than the larger battery voltage, the circuit controller deactivates a discharging path of the smaller battery (if the discharging path of the smaller battery is activated), and the larger battery is charged at a charging voltage. In accordance with a determination that the larger battery voltage is greater than the smaller battery voltage, the circuit controller activates the discharging path of the smaller battery (if the discharging path of the smaller battery is deactivated), and the larger battery and the smaller battery are charged at the charging voltage. In some embodiments, the charging voltage that is a sum of the larger battery voltage and the headroom voltage of the cross-charging prevention circuit 300. In some embodiments, while the larger battery and the smaller battery are charged, the circuit controller monitors the larger battery voltage and the smaller battery voltage to determine if the larger battery voltage matches and/or surpasses the smaller battery voltage and/or if the smaller battery voltage matches and/or surpasses the larger battery voltage. In accordance with a determination that the higher-voltage battery 310 and/or the lower-voltage battery 305 of the two or more batteries are no longer being charged (e.g., the head-wearable device 100 is decoupled from the charging device), the circuit controller activates the discharging path of the smaller battery (if the discharging path of the smaller battery is deactivated).

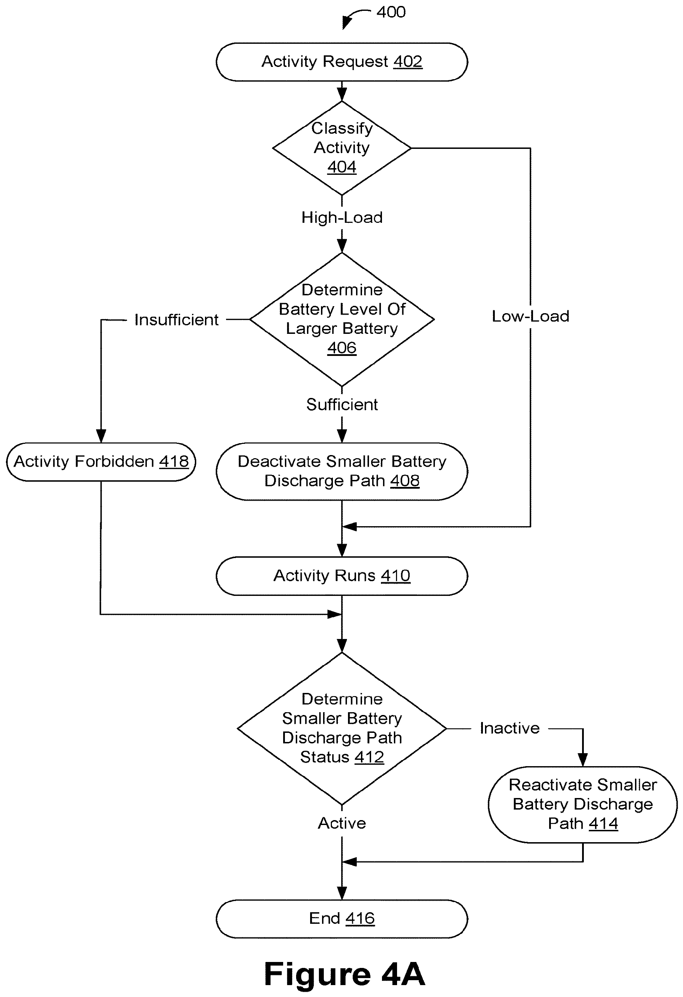

Figures 4A-4B illustrate two battery management techniques for managing the use of the two or more batteries to provide power to each of the plurality of electronic components of the head-wearable device, in accordance with some embodiments. In some embodiments, the two battery management techniques can be performed alternatively or concurrently at the head-wearable device 100. In some embodiments, the processing device and/or the system-on-chip (SoC) component controls (e.g., in accordance with one or more battery management techniques) the two or more batteries to minimize energy waste, to maximize energy efficiency, to prevent undervoltage, and/or to maximize a total battery life of the head-wearable device 100. In some embodiments, the two or more batteries includes a larger battery (e.g., with a capacity between 250 mWh and 2000 mWh) and a smaller battery (e.g., with a capacity between 125 mWh and 1000 mWh).

Figure 4A illustrates a first battery management method 400 for managing the two or more batteries of the head-wearable device 100, in accordance with some embodiments. The first method 400 includes using the smaller battery and the larger battery to provide power during low-load computational tasks (e.g., one or more low-load tasks, executed at the head-wearable device 100, such as streaming music, performing an audio call, sending a message, etc.) and using only the larger battery to provide power during high-load computational tasks (e.g., one or more low-load tasks, executed at the head-wearable device 100, such as 100 capturing video, transferring large amounts of data over Wi-Fi, performing calculations for a contextual AI program, etc.). The first method 400 includes initiating one or more computational tasks at the head-wearable device 100 (402) (e.g., in response to a user input and/or an instruction receiving from another device). The first method 400 further includes classifying the one or more computational tasks as a low-load computational task or a high-load computational task (404). In accordance with a determination that the one or more computational tasks is a high-load computational task, the first method 400 further includes determining whether a battery charge of the larger battery is sufficient to perform and/or cause performance of the one or more computational tasks (406). In some embodiments, determining whether the battery charge of the larger battery is sufficient to perform and/or cause performance of the one or more computational tasks includes determining whether the battery charge of the larger battery satisfies a battery charge threshold. In some embodiments, the battery charge threshold is based on the one or more computational tasks and/or a battery temperature. In accordance with a determination that the battery level of the larger battery is sufficient to perform and/or cause performance of the one or more computational tasks, the first method 400 further includes deactivating a discharging path of the smaller battery (408). The first method 400 further includes allowing the larger battery to supply power to the head-wearable device 100 while causing the one or more computational tasks to be performed at the head-wearable device 100 and/or the other device (410). The first method 400 further includes determining whether the discharging path of the smaller battery is active (412). In accordance with a determination that the discharging path of the smaller battery is inactive, the first method 400 further includes reactivating the discharging path of the smaller battery (414) and the first method 400 ends (416).

In accordance with a determination that the one or more computational tasks is a low-load computational task, the first method 400 further includes allowing the larger battery and the smaller battery to supply power to the head-wearable device 100 while the computational tasks are performed (410). The first method 400 further includes determining whether the discharging path of the smaller battery is active (412). In accordance with a determination that the discharging path of the smaller battery is active, the first method 400 ends (416).

In accordance with a determination that the one or more computational tasks is a high-load computational task and a determination that the battery level of the larger battery is insufficient to perform and/or cause performance of the one or more computational tasks, the first method 400 further includes preventing the head-wearable device 100 from performing and/or cause performance of the one or more computational tasks (418). The first method 400 further includes determining whether the discharging path of the smaller battery is active (412). In accordance with a determination that the discharging path of the smaller battery is active, the first method 400 ends (416).

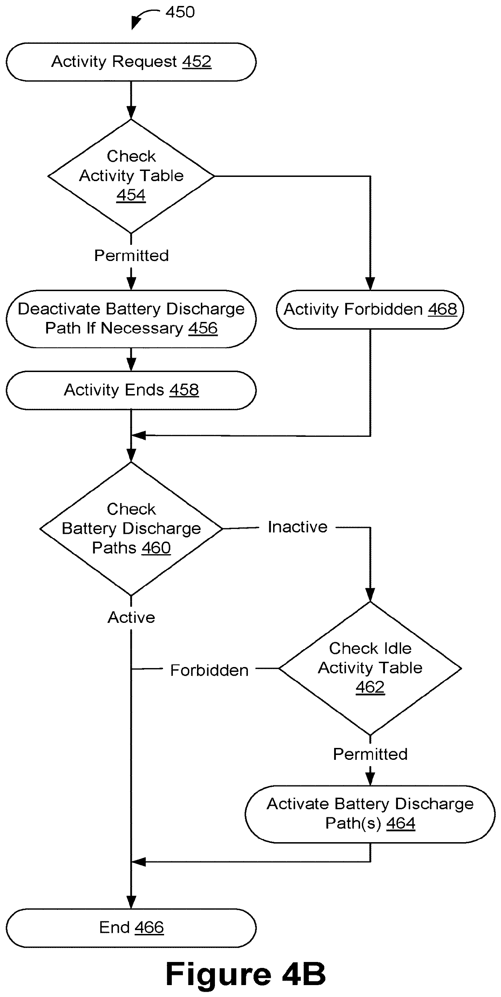

Figure 4B illustrates a second battery management method 400 for managing the two or more batteries of the head-wearable device 100, in accordance with some embodiments. The second method 450 includes using a task check table to determine whether to use both the smaller battery and the larger battery, solely the smaller battery, solely the larger battery, and/or neither of the batteries to provide power while the head-wearable device performs and/or causes performance of the one or more computational tasks (e.g., one or more tasks, executed at the head-wearable device 100, such as streaming music, performing an audio call, sending a message, capturing video, transferring large amounts of data over Wi-Fi, performing calculations for a contextual AI program, etc.). In accordance with some embodiments, the task check table includes a respective smaller battery charge threshold and a respective larger battery charge threshold for each respective computational task and for each respective battery temperature range. For example, the task check table may include a first smaller battery threshold of 75% charge and a first larger battery threshold of 25% charge for performing and/or causing performance of a livestreaming task within a first battery temperature range of 20-30 degrees Celsius, a second smaller battery threshold of 55% charge and a second larger battery threshold of 20% charge for performing and/or causing performance of the livestreaming task within a second battery temperature range of 10-20 degrees Celsius, a third smaller battery threshold of 35% charge and a third larger battery threshold of 15% charge for performing and/or causing performance of the livestreaming task within a third battery temperature range of 0-10 degrees Celsius, etc. Additionally, the task check table may include a fourth smaller battery threshold of 50% charge and a fourth larger battery threshold of 30% charge for performing and/or causing performance of a Wi-Fi data transfer task within the first battery temperature range of 20-30 degrees Celsius, a fifth smaller battery threshold of 35% charge and a second larger battery threshold of 25% charge for performing and/or causing performance of the Wi-Fi data transfer task within a second battery temperature range of 10-20 degrees Celsius, etc. In some embodiments, the task check table further includes a respective smaller idle battery charge threshold and a respective larger idle battery charge threshold for each respective battery temperature range while the head-wearable device 100 is idle (e.g., not performing and/or causing performance of any computational tasks).

The second method 450 includes initiating the one or more computational tasks at the head-wearable device 100 (452) (e.g., in response to a user input and/or an instruction receiving from another device). The second method 450 further includes determining whether the one or more computational tasks is permitted based on the task check table, a current battery temperature range, a current larger battery charge, and a current smaller battery charge (e.g., at least one of the smaller battery and the larger battery has a respective current battery charge greater than a respective battery charge threshold, given the one or more computational tasks and the current battery temperature) (454). In accordance with a determination that the one or more computational tasks are permitted, the second method 450 further includes selectively deactivating the discharging path of the smaller battery or a discharging path of the larger battery and/or forgoing deactivating the discharging path of the smaller battery and the discharging path of the larger battery, based on the task check table (e.g., if a current larger battery charge is below the respective larger battery charge threshold, the discharging path of the larger battery is deactivated, if a current smaller battery charge is below the respective smaller battery charge threshold, the discharging path of the smaller battery is deactivated, and/or if neither the current larger battery charge is below the respective larger battery charge threshold and the current smaller battery charge is below the respective smaller battery charge threshold, neither the discharging path of the larger battery nor the discharging path of the smaller battery are deactivated) (456). The second method 450 further includes allowing the larger battery and/or the smaller battery to supply power to the head-wearable device 100 while causing the one or more computational tasks to be performed at the head-wearable device 100 and/or the other device (458). The second method 450 further includes determining whether the discharging path of the smaller battery and/or the discharging path of the larger battery are active or inactive (460). In accordance with a determination that the discharging path of the smaller battery and the discharging path of the larger battery are both active, the second method 450 ends (466).

In accordance with a determination that at least one of the discharging path of the smaller battery and the discharging path of the larger battery are inactive, the second method 450 further includes determining whether the discharging path of the larger battery and/or the discharging path of the smaller battery is permitted to be reactivated, based on the task check table, a new battery temperature range, a new larger battery charge, and/or a new smaller battery charge (462). In accordance with a determination that the discharging path of the larger battery and/or the discharging path of the smaller battery is permitted to be reactivated (e.g., the respective new battery charge is greater than a respective idle battery charge threshold), the second method 450 further includes, reactivating the respective discharging path (464), and the second method 450 ends (466). In accordance with a determination that the discharging path of the larger battery and/or the discharging path of the smaller battery is not permitted to be reactivated (e.g., the respective new battery charge is less than a respective idle battery charge threshold), the respective discharging path remains deactivated, and the second method 450 ends (466).

In accordance with a determination that the one or more computational tasks are not permitted (e.g., at least one of the smaller battery and the larger battery has a respective current battery charge less than a respective battery charge threshold, given the one or more computational tasks and the current battery temperature), the second method 450 further includes causing the one or more computational tasks to not be performed at the head-wearable device 100 and/or the other device (468). In some embodiments, the second method 450 further includes determining whether the discharging path of the smaller battery and/or the discharging path of the larger battery are active or inactive (460), as described above.

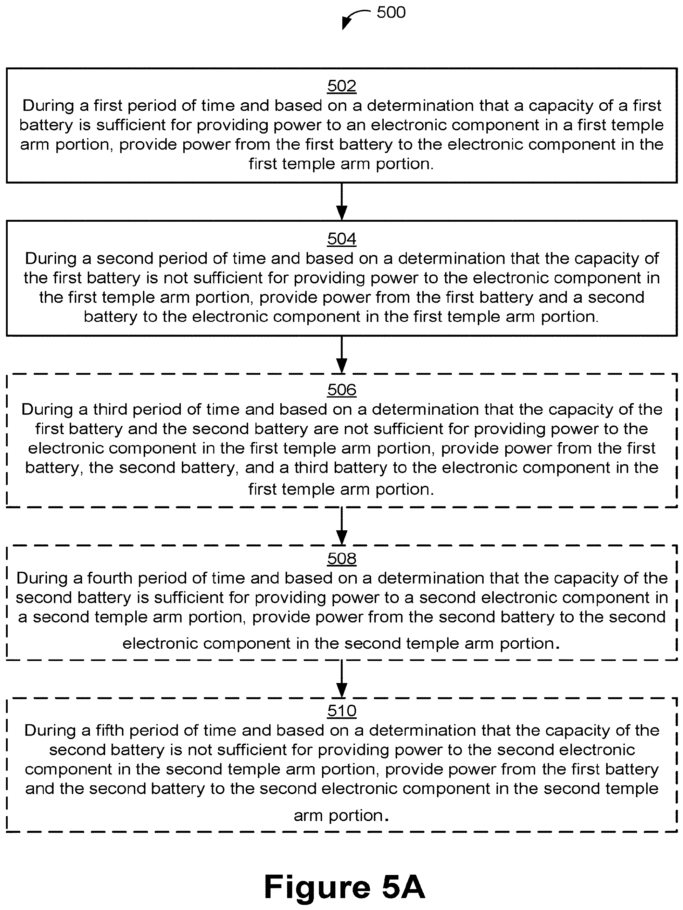

Figure 5A illustrates a flow diagram of a method of providing power from at least one battery of a head-wearable device to at least one electronic component of the head-wearable device, in accordance with some embodiments. Operations (e.g., steps) of the method 500 can be performed by one or more processors (e.g., central processing unit and/or MCU) of the head-wearable device. At least some of the operations shown in Figure 5A correspond to instructions stored in a computer memory or computer-readable storage medium (e.g., storage, RAM, and/or memory) of the head-wearable device. Operations of the method 500 can be performed by a single device alone or in conjunction with one or more processors and/or hardware components of another communicatively coupled device and/or instructions stored in memory or computer-readable medium of the other device communicatively coupled to the head-wearable device. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

Figure 5A shows a flow chart of a method 500 of providing power from at least one battery of a head-wearable device to at least one electronic component of the head-wearable device, in accordance with some embodiments.

The method 500 occurs at a head-wearable device comprising a first temple arm portion, a second temple arm portion, a first battery configured to be housed within the first temple arm portion, the first battery having a first shape, a second battery configured to be housed within the second temple arm portion, the second battery having a second shape, distinct from the first shape, and memory including executable instructions for causing the head-wearable device to perform the method 500. In some embodiments, the method 500 includes, during a first period of time and based on a determination that a capacity of the first battery is sufficient for providing power to an electronic component in the first temple arm portion, providing power from the first battery to the electronic component in the first temple arm portion (502) and, during a second period of time and based on a determination that the capacity of the first battery is not sufficient for providing power to the electronic component in the first temple arm portion, providing power from the first battery and the second battery to the electronic component in the first temple arm portion (504).

In some embodiments, the determination that the capacity of the first battery is sufficient for providing power to the electronic component in the first temple arm portion and the determination that the capacity of the first battery is not sufficient for providing power to the electronic component in the first temple arm portion are based, at least in part, on component information obtained from the electronic component in the first temple arm portion. Additionally, the component information obtained from the electronic component in the first temple arm portion indicates power needs of the electronic component in the first temple arm portion.

In some embodiments, the determination that the capacity of the first battery is sufficient for providing power to the electronic component in the first temple arm portion and the determination that the capacity of the first battery is not sufficient for providing power to the electronic component in the first temple arm portion are based, at least in part, on battery information obtained from the first battery and the second battery. Additionally, the battery information obtained from the first battery and the second battery indicates the capacity of the first battery and a capacity of the second battery.

In some embodiments, the head-wearable device further includes a third battery configured to be housed within the first temple arm portion, the third battery having a third shape, distinct from the first shape and the second shape. Additionally, the memory further includes executable instructions for, during a third period of time and based on a determination that the capacity of the first battery and the second battery are not sufficient for providing power to the electronic component in the first temple arm portion, providing power from the first battery, the second battery, and the third battery to the electronic component in the first temple arm portion (506).

In some embodiments, the memory further includes executable instructions for, during a fourth period of time and based on a determination that the capacity of the second battery is sufficient for providing power to a second electronic component in the second temple arm portion, providing power from the second battery to the second electronic component in the second temple arm portion (508). The memory further includes executable instructions for, during a fifth period of time and based on a determination that the capacity of the second battery is not sufficient for providing power to the second electronic component in the second temple arm portion, providing power from the first battery and the second battery to the second electronic component in the second temple arm portion (510).

In some embodiments, the head-wearable device further includes a frame portion. Additionally, the memory further includes executable instructions for, during a sixth period of time and based on a determination that the capacity of the first battery is sufficient for providing power to a third electronic component in the frame portion, providing power from the first battery to the third electronic component in the frame portion. The memory further includes executable instructions for, during a seventh period of time and based on a determination that the capacity of the first battery is not sufficient for providing power to the third electronic component in the frame portion, providing power from the first battery and the second battery to the third electronic component in the frame portion.

In some embodiments, the head-wearable device further includes a fourth battery configured to be housed within the frame portion, the fourth battery having a fourth shape, distinct from the first shape and the second shape. Additionally, the memory further includes executable instructions for, during an eighth period of time and based on a determination that a capacity of the fourth battery is sufficient for providing power to the third electronic component in the frame portion, providing power from the fourth battery to the third electronic component in the frame portion. The memory further includes executable instructions for, during a ninth period of time and based on a determination that the capacity of the fourth battery is not sufficient for providing power to the third electronic component in the frame portion, providing power from the first battery, the second battery, and the fourth battery to the third electronic component in the frame portion.

In some embodiments, the memory further includes executable instructions for, during a tenth period of time and based on a determination that the capacity of the first battery is sufficient for providing power to the first electronic component in the first temple arm portion and a fifth electronic component in the first temple arm portion, providing power from the first battery to the first electronic component in the first temple arm portion and the fifth electronic component in the first temple arm portion. Additionally, the memory further includes executable instructions for, during an eleventh period of time and based on a determination that the capacity of the first battery is not sufficient for providing power to the first electronic component in the first temple arm portion and the fifth electronic component in the first temple arm portion, providing power from the first battery and the second battery to the first electronic component in the first temple arm portion and the fifth electronic component in the first temple arm portion.

In some embodiments, the head-wearable device further includes an energy storage device, distinct from the first battery and the second battery, configured to be housed within the first temple arm portion. Additionally, the memory further includes executable instructions for, during a twelfth period of time and based on a determination that the capacity of the first battery and a capacity of the second battery are not sufficient for providing power the electronic component in the first temple arm portion, providing power from the first battery, the second battery, and the energy storage device to the first electronic component in the first temple arm portion.

In some embodiments, the period of eighth period of time is at least one of a period of time where a camera of the head-wearable device records video data, a period of time where a communication device of the head-wearable transfers a data file, a period of time where a processing device of the head-wearable device generates artificial intelligence (AI) content with an AI program, and a period of time where the camera of the head-wearable device records image data including content and the processing device of the head-wearable device translates the content.

In some embodiments, the energy storage device is one of an ultra-capacitor, an electrolytic capacitor, and another battery.

In some embodiments, the determination that the capacity of the first battery and a capacity of the second battery are not sufficient for providing power the electronic component in the first temple arm portion is based on a determination that the electronic component is experiencing a transient power-demand spike.

In some embodiments, the electronic component is at least one of a sensor, a camera, a computing device, a system-on-chip (SOC), a memory storage device, a double data rate synchronous dynamic random-access memory (DDR SRAM), an XR processing device, a display device, an audio device, a communications device, a power management integrated circuit (PMIC), and an audio amplifier circuit.

In some embodiments, the head-wearable device is one of an XR headset and a pair of smart glasses.

In some embodiments, a capacity of the first battery is between 200 mWh and 500 mWh, and a capacity of the second battery is between 300 mWh and 1000 mWh.

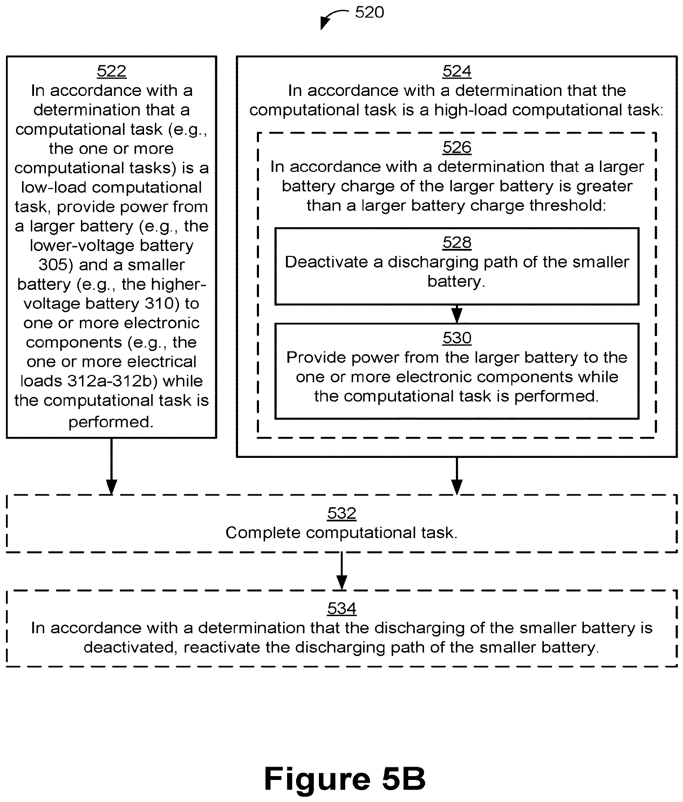

Figure 5B illustrates a flow diagram of a method of providing power from one or more batteries of a head-wearable device based on a power load requirement of a requested computational task, in accordance with some embodiments. Operations (e.g., steps) of the method 520 can be performed by one or more processors (e.g., central processing unit and/or MCU) of the head-wearable device. At least some of the operations shown in Figure 5B correspond to instructions stored in a computer memory or computer-readable storage medium (e.g., storage, RAM, and/or memory) of the head-wearable device. Operations of the method 520 can be performed by a single device alone or in conjunction with one or more processors and/or hardware components of another communicatively coupled device and/or instructions stored in memory or computer-readable medium of the other device communicatively coupled to the head-wearable device. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

Figure 5B shows a flow chart of a method 520 of providing power from one or more batteries of a head-wearable device based on a power load requirement of a requested computational task, in accordance with some embodiments.

The method 520 occurs at a head-wearable device comprising a larger battery (e.g., the lower-voltage battery 305), a smaller battery (e.g., the higher-voltage battery 310), one or more electronic components (e.g., the one or more electrical loads 312a-312b), and memory including executable instructions for causing the head-wearable device to perform the method 520 in response to a request to perform a computational task (e.g., the one or more computational tasks, as described in reference to Figure 4A). In some embodiments, the method 520 includes, in accordance with a determination that the computational task is a low-load computational task (e.g., a low-load computational task, as described in reference to Figure 4A), providing power from the larger battery and the smaller battery to the one or more electronic components while the computational task is performed (522). The method 520 further includes, in accordance with a determination that the computational task is a high-load computational task (e.g., a high-load computational task, as described in reference to Figure 4A) (524): deactivating a discharging path of the smaller battery (e.g., the discharging path of the smaller battery, as described in reference to Figure 4A) (528) and providing power from the larger battery to the one or more electronic components while the computational task is performed (530).

In some embodiments, deactivating the discharging path of the smaller battery and providing power from the larger battery to the one or more electronic components while the causing computational task to be performed is further in accordance with a determination that a larger battery charge of the larger battery is greater than a larger battery charge threshold (e.g., determining whether the battery charge of the larger battery is sufficient to perform and/or cause performance of the one or more computational tasks, as described in reference to Figure 4A) (526).

In some embodiments, the method 520 further includes in accordance with the determination that the computational task is the high-load computational task, before deactivating the discharging path of the smaller battery, and in accordance with a determination that the larger battery charge of the larger battery is less than the larger battery charge threshold, causing the computational task to not be performed (e.g., preventing the head-wearable device 100 from performing and/or cause performance of the one or more computational tasks, as described in reference to Figure 4A).

In some embodiments, the larger battery charge threshold is based on one or more of: (i) the computational task, (ii) a temperature of the larger battery, and/or (iii) a temperature of the head-wearable device.

In some embodiments, the method 520 further includes, after the computational task is performed (532) and in accordance with a determination that the discharging of the smaller battery is deactivated, reactivating the discharging path of the smaller battery (534).

In some embodiments, the method 520 further includes, in accordance with a determination that the computational task is another type of computational task (e.g., an ultra-low-load task): (i) deactivating a discharging path of the larger battery and (ii) providing power from the smaller battery to the one or more electronic components while the computational task is performed.

In some embodiments, the method 520 further includes, in response to a second request to perform another computational task and in accordance with a determination that the second computational task is a low-load computational task, providing power from the larger battery and the smaller battery to the one or more electronic components while the other computational task is performed. The method 520 further includes, in accordance with a determination that the other computational task is a high-load computational task (i) deactivating the discharging path of the smaller battery and (ii) providing power from the larger battery to the one or more electronic components while the other computational task is performed.

In some embodiments, the head-wearable device further comprises a charging path regulator (e.g., the first charging path regulator 320a), electrically coupled to the smaller battery, comprising one or more transistors (e.g., the charging transistor and the discharging transistor, as described in reference to Figure 3). The charging path regulator is configured to activate and deactivate the discharging path of the smaller battery.

In some embodiments, the head-wearable device is one of an XR headset and a pair of smart glasses.

In some embodiments, a maximum capacity of the smaller battery is between 200 mWh and 500 mWh, and a maximum capacity of the larger battery is between 300 mWh and 1000 mWh.

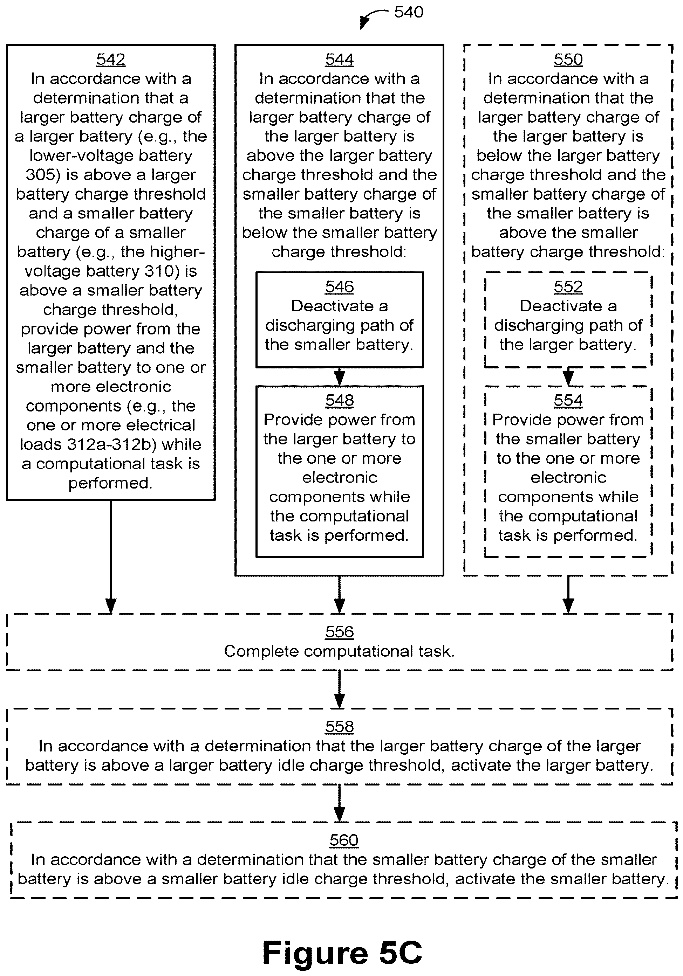

Figure 5C illustrates a flow diagram of a method of providing power from one or more batteries of a head-wearable device based on battery charge thresholds associated with a requested computational task, in accordance with some embodiments. Operations (e.g., steps) of the method 540 can be performed by one or more processors (e.g., central processing unit and/or MCU) of the head-wearable device. At least some of the operations shown in Figure 5C correspond to instructions stored in a computer memory or computer-readable storage medium (e.g., storage, RAM, and/or memory) of the head-wearable device. Operations of the method 540 can be performed by a single device alone or in conjunction with one or more processors and/or hardware components of another communicatively coupled device and/or instructions stored in memory or computer-readable medium of the other device communicatively coupled to the head-wearable device. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

Figure 5C shows a flow chart of a method 540 of providing power from one or more batteries of a head-wearable device based on battery charge thresholds associated with a requested computational task, in accordance with some embodiments.

The method 540 occurs at a head-wearable device comprising a larger battery (e.g., the lower-voltage battery 305), a smaller battery (e.g., the higher-voltage battery 310), one or more electronic components (e.g., the one or more electrical loads 312a-312b), and memory including executable instructions for causing the head-wearable device to perform the method 540 in response to a request to perform a computational task (e.g., the one or more computational tasks, as described in reference to Figure 4B). In some embodiments, the method 540 includes, in accordance with a determination that a larger battery charge of the larger battery is above a larger battery charge threshold (e.g., as determined by the task check table, as described in reference to Figure 4B) and a smaller battery charge of the smaller battery is above a smaller battery charge threshold (e.g., as determined by the task check table, as described in reference to Figure 4B), providing power from the larger battery and the smaller battery to the one or more electronic components while the computational task is performed (542). The method 540 further includes, in accordance with a determination that the larger battery charge of the larger battery is above the larger battery charge threshold and the smaller battery charge of the smaller battery is below the smaller battery charge threshold (544): (i) deactivating a discharging path of the smaller battery (e.g., the discharging path of the smaller battery, as described in reference to Figure 4B) (546) and (ii) providing power from the larger battery to the one or more electronic components while the computational task is performed (548).

In some embodiments, the method 540 further includes, in accordance with a determination that the larger battery charge of the larger battery is below the larger battery charge threshold and the smaller battery charge of the smaller battery is above the smaller battery charge threshold (550): (i) deactivating a discharging path of the larger battery (552) and (ii) providing power from the smaller battery to the one or more electronic components while the computational task is performed (554).

In some embodiments, the method 540 further includes, after the computational task is performed (556): (i) in accordance with a determination that the larger battery charge of the larger battery is above a larger battery idle charge threshold, activating a discharging path of the larger battery (558), (ii) in accordance with a determination that the larger battery charge of the larger battery is below the larger battery idle charge threshold (e.g., as determined by the task check table, as described in reference to Figure 4B), deactivating the discharging path of the larger battery, (iii) in accordance with a determination that the smaller battery charge of the smaller battery is above a smaller battery idle charge threshold (e.g., as determined by the task check table, as described in reference to Figure 4B), activating the discharging path of the smaller battery (560), and (iv) in accordance with a determination that the smaller battery charge of the smaller battery is below the smaller battery idle charge threshold, deactivating the discharging path of the smaller battery.

In some embodiments, the method 540 further includes, in accordance with a determination that the larger battery charge of the larger battery is below the larger battery charge threshold and the smaller battery charge of the smaller battery is below the smaller battery charge threshold (e.g., the determination that the one or more computational tasks are not permitted, as described in reference to Figure 4B), causing the computational task to not be performed.

In some embodiments, the larger battery charge threshold is based on one or more of: (i) the computational task, (ii) a temperature of the larger battery, and (iii) a temperature of the head-wearable device. the smaller battery charge threshold is based on one or more of: (i) the computational task, (ii) a temperature of the smaller battery, and (iii) a temperature of the head-wearable device (e.g., as described in the task check table, as described in reference to Figure 4B).

In some embodiments, the method 540 further includes, in response to a request to perform another computational task, distinct from the computational task and in accordance with a determination that the larger battery charge of the larger battery is above another larger battery charge threshold, distinct from the larger battery charger threshold, and the smaller battery charge of the smaller battery is above another smaller battery charge threshold, distinct from the smaller battery charge threshold, providing power from the larger battery and the smaller battery to the one or more electronic components while the computational task is performed. The method 540 further includes, in accordance with a determination that the larger battery charge of the larger battery is above the other larger battery charge threshold and the smaller battery charge of the smaller battery is below the other smaller battery charge threshold: (i) deactivating a discharging path of the smaller battery and (ii) providing power from the larger battery to the one or more electronic components while the other computational task is performed.

In some embodiments, the head-wearable device further comprises (i) a first charging path regulator (e.g., the first charging path regulator 320a), electrically coupled to the larger battery, comprising one or more transistors (e.g., the charging transistor and the discharging transistor), wherein the first charging path regulator is configured to activate and deactivate the discharging path of the larger battery and (ii) . a second charging path regulator (e.g., the second charging path regulator 320b), electrically coupled to the smaller battery, comprising one or more transistors (e.g., the charging transistor and the discharging transistor), wherein the second charging path regulator is configured to activate and deactivate the discharging path of the smaller battery

In some embodiments, the head-wearable device is one of an XR headset and a pair of smart glasses.

In some embodiments, a maximum capacity of the smaller battery is between 200 mWh and 500 mWh, and a maximum capacity of the larger battery is between 300 mWh and 1000 mWh.

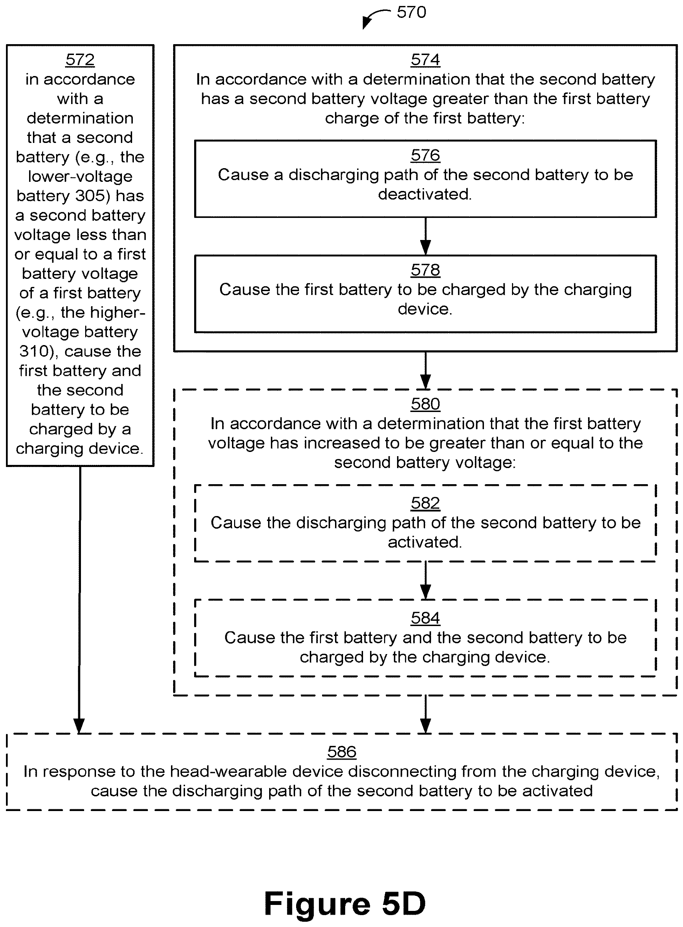

Figure 5D illustrates a flow diagram of a method of charging two or more batteries of a head-wearable device while preventing one battery from charging another, in accordance with some embodiments. Operations (e.g., steps) of the method 570 can be performed by one or more processors (e.g., central processing unit and/or MCU) of the head-wearable device. At least some of the operations shown in Figure 5D correspond to instructions stored in a computer memory or computer-readable storage medium (e.g., storage, RAM, and/or memory) of the head-wearable device. Operations of the method 570 can be performed by a single device alone or in conjunction with one or more processors and/or hardware components of another communicatively coupled device and/or instructions stored in memory or computer-readable medium of the other device communicatively coupled to the head-wearable device. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

Figure 5D shows a flow chart of a method 570 of charging two or more batteries of a head-wearable device while preventing one battery from charging another, in accordance with some embodiments.

The method 570 occurs at a head-wearable device comprising a first battery (e.g., the lower-voltage battery 305), a second battery (e.g., the higher-voltage battery 310), one or more electronic components (e.g., the one or more electrical loads 312a-312b), and memory including executable instructions for causing the head-wearable device to perform the method 570 in response to the head-wearable device being connected to a charging device (e.g., the charging device, as described in reference to Figure 4B). In some embodiments, the method 570 includes, in accordance with a determination that the second battery has a second battery voltage less than or equal to a first battery voltage of the first battery, causing the first battery and the second battery to be charged by the charging device (572). The method 570 further includes, in accordance with a determination that the second battery has a second battery voltage greater than the first battery charge of the first battery (574): (i) causing a discharging path of the second battery to be deactivated (e.g., the discharging path of the smaller battery, as described in reference to Figure 4B) (576) and (ii) causing the first battery to be charged by the charging device (578).

In some embodiments, the method 570 further includes, after causing the first battery to be charged by the charging device and while the discharging path of the second battery is deactivated and in accordance with a determination that the first battery voltage has increased to be greater than or equal to the second battery voltage (580): (i) causing the discharging path of the second battery to be activated (582) and (ii) causing the first battery and the second battery to be charged by the charging device (584).

In some embodiments, the method 570 further includes, after causing the first battery and the second battery to be charged by the charging device and while the discharging path of the second battery is activated and in accordance with a determination that the second battery voltage has increased to be greater than the first battery voltage: (i) causing the discharging path of the second battery to be deactivated and (ii) causing the first battery to be charged by the charging device.

In some embodiments, the method 570 further includes, in response to the head-wearable device disconnecting from the charging device, causing the discharging path of the second battery to be activated (586).

In some embodiments, the first battery and the second battery are charged at a charging voltage, and the charging voltage that is a sum of the first battery voltage and a headroom voltage (e.g., as described in reference to Figure 3).

In some embodiments, the head-wearable device further comprises a charging path regulator (e.g., the second charging path regulator 320b), electrically coupled to the second battery, comprising one or more transistors (e.g., the charging transistor and/or the discharging transistor). The charging path regulator is configured to activate and deactivate the discharging path of the second battery.

In some embodiments, the the charging path regulator deactivates the discharging path of the second battery by one or more of: (i) electrically decoupling, by the one or more transistors, the second battery from the charging device and the first battery and (ii) regulating, by the one or more transistors, a discharging current supplied by the second battery (e.g., as described in reference to Figure 3).

In some embodiments, the first battery has a first maximum capacity, and the second battery has a second maximum capacity, less than the first capacity

In some embodiments, the maximum first capacity of the first battery is between 300 mWh and 1000 mWh, and the maximum second capacity of the second battery is between 200 mWh and 500 mWh.

In some embodiments, the head-wearable device is one of an XR headset and a pair of smart glasses.

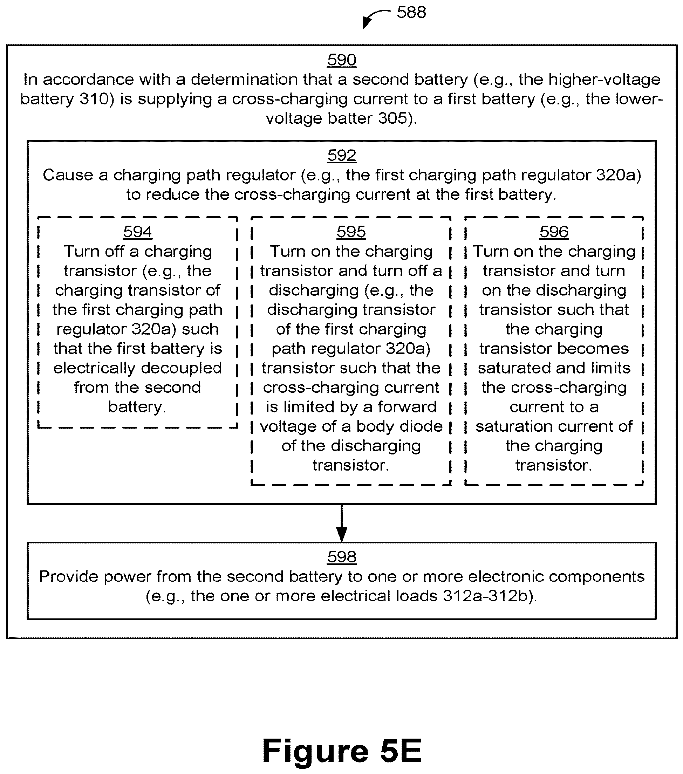

Figure 5E illustrates a flow diagram of a method of managing cross-charging between two batteries of a head-wearable device, in accordance with some embodiments. Operations (e.g., steps) of the method 588 can be performed by one or more processors (e.g., central processing unit and/or MCU) of the head-wearable device. At least some of the operations shown in Figure 5D correspond to instructions stored in a computer memory or computer-readable storage medium (e.g., storage, RAM, and/or memory) of the head-wearable device. Operations of the method 588 can be performed by a single device alone or in conjunction with one or more processors and/or hardware components of another communicatively coupled device and/or instructions stored in memory or computer-readable medium of the other device communicatively coupled to the head-wearable device. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

Figure 5E shows a flow chart of a method 588 of managing cross-charging between two batteries of a head-wearable device, in accordance with some embodiments.

The method 588 occurs at a head-wearable device comprising a first battery (e.g., the lower-voltage battery 305), a second battery (e.g., the higher-voltage battery 310), one or more electronic components (e.g., the one or more electrical loads 312a-312b), charging path regulator (e.g., the first charging path regulator 320a), electrically coupled to the first battery, comprising at least a charging transistor (e.g., the charging transistor, as described in reference to Figure 3) and a discharging transistor (e.g., the discharging transistor, as described in reference to Figure 3), and memory including executable instructions for causing the head-wearable device to perform the method 588. In some embodiments, the method 588 includes, in accordance with a determination that the second battery is supplying a cross-charging current (e.g., the cross-charging current, as described in reference to Figure 3) to the first battery (590): (i) causing the charging path regulator to reduce the cross-charging current at the first battery (592) and (ii) providing power from the second battery to the one or more electronic components (598).

In some embodiments, causing the charging path regulator to reduce the cross-charging current at the first battery includes turning off the charging transistor such that the first battery is electrically decoupled from the second battery (e.g., the disable mode, as described in reference to Figure 3) (594).

In some embodiments, causing the charging path regulator to reduce the cross-charging current at the first battery includes turning on the charging transistor and turning off the discharging transistor such that the cross-charging current is limited by a forward voltage of a body diode of the discharging transistor (e.g., the redirect mode, as described in reference to Figure 3) (595).

In some embodiments, causing the charging path regulator to reduce the cross-charging current at the first battery includes turning on the charging transistor and turning on the discharging transistor such that the charging transistor becomes saturated and limits the cross-charging current to a saturation current of the charging transistor (e.g., the regulate mode, as described in reference to Figure 3) (596).

In some embodiments, the determination that the second battery is supplying the cross-charging current to the first battery includes a determination that the cross-charging current is above a cross-charging current threshold.

In some embodiments, causing the charging path regulator to reduce the cross-charging current at the first battery and the providing power from the second battery to the one or more electronic components is further in accordance with a determination the head-wearable device is not connected to a charging device.

In some embodiments, the charging transistor is a first metal-oxide-semiconductor field-effect transmitters (MOSFET), and the discharging transistor is a second MOSFET.

In some embodiments, the cross-charging current is a current measured at a cathode of the first battery.

In some embodiments, the head-wearable device is one of an XR headset and a pair of smart glasses.

In accordance with some embodiments, a non-transitory, computer-readable storage medium including the executable instructions of any of the one or embodiments described herein that, when executed by one or more processors, cause the one or more processors to perform or cause performance of the executable instructions of any of the one or embodiments described herein at the head-wearable device of any of the one or embodiments described herein.

In accordance with some embodiments, means for performing or causing performance of the executable instructions of any of the one or embodiments described herein at the head-wearable device of any of the one or embodiments described herein.

In accordance with some embodiments, an intermediary processing device (e.g., configured to offload processing operations for a head-wearable device such as extended-reality glasses) configured to perform or cause performance of the executable instructions of any of the one or embodiments described herein at the head-wearable device of any of the one or embodiments described herein.

In accordance with some embodiments, a method comprising causing the executable instructions of any of the one or embodiments described herein to be performed at the head-wearable device of any of the one or embodiments described herein.

### Example Extended-Reality Systems

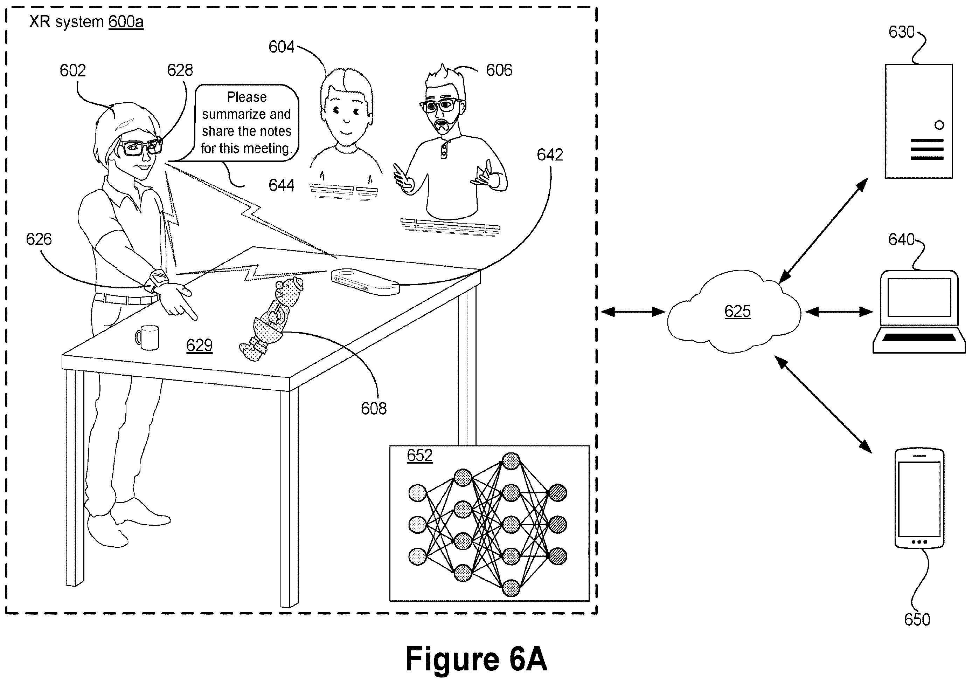

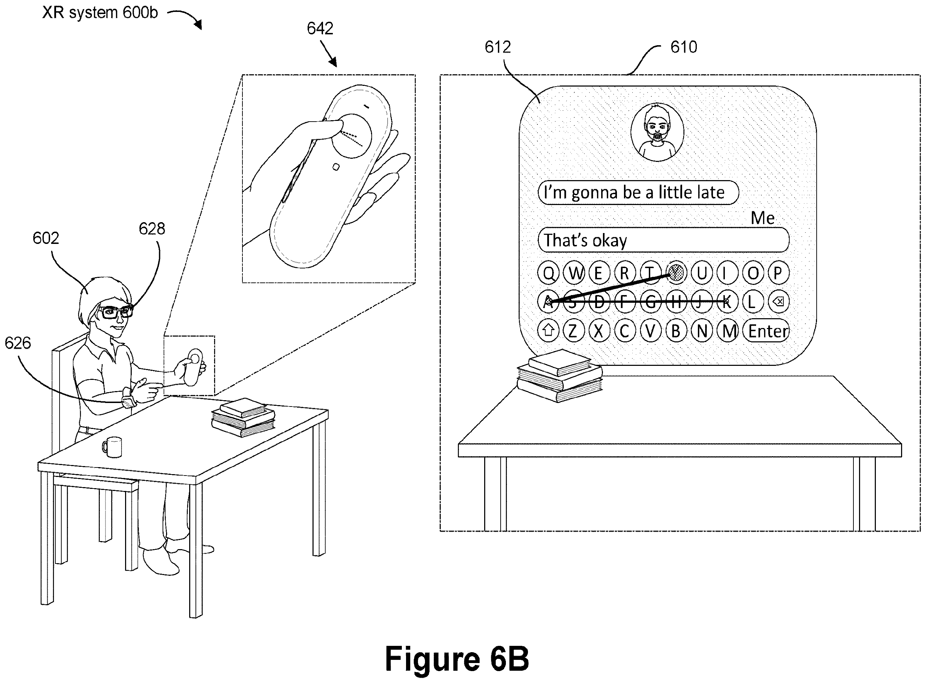

Figures 6A, 6B, 6C-1, and 6C-2, illustrate example XR systems that include AR and MR systems, in accordance with some embodiments. Figure 6A shows a first XR system 600a and first example user interactions using a wrist-wearable device 626, a head-wearable device (e.g., AR device 628), and/or a HIPD 642. Figure 6B shows a second XR system 600b and second example user interactions using a wrist-wearable device 626, AR device 628, and/or an HIPD 642. Figures 6C-1 and 6C-2 show a third MR system 600c and third example user interactions using a wrist-wearable device 626, a head-wearable device (e.g., an MR device such as a VR device), and/or an HIPD 642. As the skilled artisan will appreciate upon reading the descriptions provided herein, the above-example AR and MR systems (described in detail below) can perform various functions and/or operations.

The wrist-wearable device 626, the head-wearable devices, and/or the HIPD 642 can communicatively couple via a network 625 (e.g., cellular, near field, Wi-Fi, personal area network, wireless LAN). Additionally, the wrist-wearable device 626, the head-wearable device, and/or the HIPD 642 can also communicatively couple with one or more servers 630, computers 640 (e.g., laptops, computers), mobile devices 650 (e.g., smartphones, tablets), and/or other electronic devices via the network 625 (e.g., cellular, near field, Wi-Fi, personal area network, wireless LAN). Similarly, a smart textile-based garment, when used, can also communicatively couple with the wrist-wearable device 626, the head-wearable device(s), the HIPD 642, the one or more servers 630, the computers 640, the mobile devices 650, and/or other electronic devices via the network 625 to provide inputs.

Turning to Figure 6A, a user 602 is shown wearing the wrist-wearable device 626 and the AR device 628 and having the HIPD 642 on their desk. The wrist-wearable device 626, the AR device 628, and the HIPD 642 facilitate user interaction with an AR environment. In particular, as shown by the first AR system 600a, the wrist-wearable device 626, the AR device 628, and/or the HIPD 642 cause presentation of one or more avatars 604, digital representations of contacts 606, and virtual objects 608. As discussed below, the user 602 can interact with the one or more avatars 604, digital representations of the contacts 606, and virtual objects 608 via the wrist-wearable device 626, the AR device 628, and/or the HIPD 642. In addition, the user 602 is also able to directly view physical objects in the environment, such as a physical table 629, through transparent lens(es) and waveguide(s) of the AR device 628. Alternatively, an MR device could be used in place of the AR device 628 and a similar user experience can take place, but the user would not be directly viewing physical objects in the environment, such as table 629, and would instead be presented with a virtual reconstruction of the table 629 produced from one or more sensors of the MR device (e.g., an outward facing camera capable of recording the surrounding environment).

The user 602 can use any of the wrist-wearable device 626, the AR device 628 (e.g., through physical inputs at the AR device and/or built-in motion tracking of a user's extremities), a smart-textile garment, externally mounted extremity tracking device, the HIPD 642 to provide user inputs, etc. For example, the user 602 can perform one or more hand gestures that are detected by the wrist-wearable device 626 (e.g., using one or more EMG sensors and/or IMUs built into the wrist-wearable device) and/or AR device 628 (e.g., using one or more image sensors or cameras) to provide a user input. Alternatively, or additionally, the user 602 can provide a user input via one or more touch surfaces of the wrist-wearable device 626, the AR device 628, and/or the HIPD 642, and/or voice commands captured by a microphone of the wrist-wearable device 626, the AR device 628, and/or the HIPD 642. The wrist-wearable device 626, the AR device 628, and/or the HIPD 642 include an artificially intelligent digital assistant to help the user in providing a user input (e.g., completing a sequence of operations, suggesting different operations or commands, providing reminders, confirming a command). For example, the digital assistant can be invoked through an input occurring at the AR device 628 (e.g., via an input at a temple arm of the AR device 628). In some embodiments, the user 602 can provide a user input via one or more facial gestures and/or facial expressions. For example, cameras of the wrist-wearable device 426, the AR device 628, and/or the HIPD 642 can track the user 602's eyes for navigating a user interface.

The wrist-wearable device 626, the AR device 628, and/or the HIPD 642 can operate alone or in conjunction to allow the user 602 to interact with the AR environment. In some embodiments, the HIPD 642 is configured to operate as a central hub or control center for the wrist-wearable device 626, the AR device 628, and/or another communicatively coupled device. For example, the user 602 can provide an input to interact with the AR environment at any of the wrist-wearable device 626, the AR device 628, and/or the HIPD 642, and the HIPD 642 can identify one or more back-end and front-end tasks to cause the performance of the requested interaction and distribute instructions to cause the performance of the one or more back-end and front-end tasks at the wrist-wearable device 626, the AR device 628, and/or the HIPD 642. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 642 can perform the back-end tasks and provide the wrist-wearable device 626 and/or the AR device 628 operational data corresponding to the performed back-end tasks such that the wrist-wearable device 626 and/or the AR device 628 can perform the front-end tasks. In this way, the HIPD 642, which has more computational resources and greater thermal headroom than the wrist-wearable device 626 and/or the AR device 428, performs computationally intensive tasks and reduces the computer resource utilization and/or power usage of the wrist-wearable device 626 and/or the AR device 628.

In the example shown by the first AR system 600a, the HIPD 642 identifies one or more back-end tasks and front-end tasks associated with a user request to initiate an AR video call with one or more other users (represented by the avatar 604 and the digital representation of the contact 606) and distributes instructions to cause the performance of the one or more back-end tasks and front-end tasks. In particular, the HIPD 642 performs back-end tasks for processing and/or rendering image data (and other data) associated with the AR video call and provides operational data associated with the performed back-end tasks to the AR device 628 such that the AR device 628 performs front-end tasks for presenting the AR video call (e.g., presenting the avatar 604 and the digital representation of the contact 606).

In some embodiments, the HIPD 642 can operate as a focal or anchor point for causing the presentation of information. This allows the user 602 to be generally aware of where information is presented. For example, as shown in the first AR system 600a, the avatar 604 and the digital representation of the contact 606 are presented above the HIPD 642. In particular, the HIPD 642 and the AR device 628 operate in conjunction to determine a location for presenting the avatar 604 and the digital representation of the contact 606. In some embodiments, information can be presented within a predetermined distance from the HIPD 642 (e.g., within five meters). For example, as shown in the first AR system 600a, virtual object 608 is presented on the desk some distance from the HIPD 642. Similar to the above example, the HIPD 642 and the AR device 628 can operate in conjunction to determine a location for presenting the virtual object 608. Alternatively, in some embodiments, presentation of information is not bound by the HIPD 642. More specifically, the avatar 604, the digital representation of the contact 606, and the virtual object 608 do not have to be presented within a predetermined distance of the HIPD 642. While an AR device 628 is described working with an HIPD, an MR headset can be interacted with in the same way as the AR device 628.

User inputs provided at the wrist-wearable device 626, the AR device 628, and/or the HIPD 642 are coordinated such that the user can use any device to initiate, continue, and/or complete an operation. For example, the user 602 can provide a user input to the AR device 628 to cause the AR device 628 to present the virtual object 608 and, while the virtual object 608 is presented by the AR device 628, the user 602 can provide one or more hand gestures via the wrist-wearable device 626 to interact and/or manipulate the virtual object 608. While an AR device 628 is described working with a wrist-wearable device 626, an MR headset can be interacted with in the same way as the AR device 628.

### Integration of Artificial Intelligence with XR Systems

Figure 6A illustrates an interaction in which an artificially intelligent virtual assistant can assist in requests made by a user 602. The AI virtual assistant can be used to complete open-ended requests made through natural language inputs by a user 602. For example, in Figure 6A the user 602 makes an audible request 644 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 6A also illustrates an example neural network 652 used in Artificial Intelligence applications. Uses of Artificial Intelligence (AI) are varied and encompass many different aspects of the devices and systems described herein. AI capabilities cover a diverse range of applications and deepen interactions between the user 602 and user devices (e.g., the AR device 628, an MR device 632, the HIPD 642, the wrist-wearable device 626). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, *k*-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein that employ multiple AI models, different models can be used depending on the task. For example, for a natural-language artificially intelligent virtual assistant, an LLM can be used and for the object detection of a physical environment, a DNN can be used instead.

In another example, an AI virtual assistant can include many different AI models and based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 602 can interact with an AI model through natural language inputs captured by a voice sensor, text inputs, or any other input modality that accepts natural language and/or a corresponding voice sensor module. In another instance, input is provided by tracking the eye gaze of a user 602 via a gaze tracker module. Additionally, the AI model can also receive inputs beyond those supplied by a user 602. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 628) or from multiple devices that are in communication with each other (e.g., a system that includes at least two of an AR device 628, an MR device 632, the HIPD 642, the wrist-wearable device 626, etc.). The AI model can also access additional information (e.g., one or more servers 630, the computers 640, the mobile devices 650, and/or other electronic devices) via a network 625.

A non-limiting list of AI-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, Al-enhanced functions are fully or partially executed on cloud-computing platforms communicatively coupled to the user devices (e.g., the AR device 628, an MR device 632, the HIPD 642, the wrist-wearable device 626) via the one or more networks. The cloud-computing platforms provide scalable computing resources, distributed computing, managed AI services, interference acceleration, pre-trained models, APIs and/or other resources to support comprehensive computations required by the AI-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 628, an MR device 632, the HIPD 642, the wrist-wearable device 626), storage options of the external devices (servers, computers, mobile devices, etc.), and/or storage options of the cloud-computing platforms.

The AI-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 642), haptic feedback can provide information to the user 602. An AI model can also use the inputs described above to determine the appropriate modality and device(s) to present content to the user (e.g., a user walking on a busy road can be presented with an audio output instead of a visual output to avoid distracting the user 602).

### Example Augmented Reality Interaction

Figure 6B shows the user 602 wearing the wrist-wearable device 626 and the AR device 628 and holding the HIPD 642. In the second AR system 600b, the wrist-wearable device 626, the AR device 628, and/or the HIPD 642 are used to receive and/or provide one or more messages to a contact of the user 602. In particular, the wrist-wearable device 626, the AR device 628, and/or the HIPD 642 detect and coordinate one or more user inputs to initiate a messaging application and prepare a response to a received message via the messaging application.

In some embodiments, the user 602 initiates, via a user input, an application on the wrist-wearable device 626, the AR device 628, and/or the HIPD 642 that causes the application to initiate on at least one device. For example, in the second AR system 600b the user 602 performs a hand gesture associated with a command for initiating a messaging application (represented by messaging user interface 612); the wrist-wearable device 626 detects the hand gesture; and, based on a determination that the user 602 is wearing the AR device 628, causes the AR device 628 to present a messaging user interface 612 of the messaging application. The AR device 628 can present the messaging user interface 612 to the user 602 via its display (e.g., as shown by user 602's field of view 610). In some embodiments, the application is initiated and can be run on the device (e.g., the wrist-wearable device 626, the AR device 628, and/or the HIPD 642) that detects the user input to initiate the application, and the device provides another device operational data to cause the presentation of the messaging application. For example, the wrist-wearable device 626 can detect the user input to initiate a messaging application, initiate and run the messaging application, and provide operational data to the AR device 628 and/or the HIPD 642 to cause presentation of the messaging application. Alternatively, the application can be initiated and run at a device other than the device that detected the user input. For example, the wrist-wearable device 626 can detect the hand gesture associated with initiating the messaging application and cause the HIPD 642 to run the messaging application and coordinate the presentation of the messaging application.

Further, the user 602 can provide a user input provided at the wrist-wearable device 626, the AR device 628, and/or the HIPD 642 to continue and/or complete an operation initiated at another device. For example, after initiating the messaging application via the wrist-wearable device 626 and while the AR device 628 presents the messaging user interface 612, the user 602 can provide an input at the HIPD 642 to prepare a response (e.g., shown by the swipe gesture performed on the HIPD 642). The user 602's gestures performed on the HIPD 642 can be provided and/or displayed on another device. For example, the user 602's swipe gestures performed on the HIPD 642 are displayed on a virtual keyboard of the messaging user interface 612 displayed by the AR device 628.

In some embodiments, the wrist-wearable device 626, the AR device 628, the HIPD 642, and/or other communicatively coupled devices can present one or more notifications to the user 602. The notification can be an indication of a new message, an incoming call, an application update, a status update, etc. The user 602 can select the notification via the wrist-wearable device 626, the AR device 628, or the HIPD 642 and cause presentation of an application or operation associated with the notification on at least one device. For example, the user 602 can receive a notification that a message was received at the wrist-wearable device 626, the AR device 628, the HIPD 642, and/or other communicatively coupled device and provide a user input at the wrist-wearable device 626, the AR device 628, and/or the HIPD 642 to review the notification, and the device detecting the user input can cause an application associated with the notification to be initiated and/or presented at the wrist-wearable device 626, the AR device 628, and/or the HIPD 642.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 628 can present to the user 602 game application data and the HIPD 642 can use a controller to provide inputs to the game. Similarly, the user 602 can use the wrist-wearable device 626 to initiate a camera of the AR device 628, and the user can use the wrist-wearable device 626, the AR device 628, and/or the HIPD 642 to manipulate the image capture (e.g., zoom in or out, apply filters) and capture image data.

While an AR device 628 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 6C-1 and 6C-2, the user 602 is shown wearing the wrist-wearable device 626 and an MR device 632 (e.g., a device capable of providing either an entirely VR experience or an MR experience that displays object(s) from a physical environment at a display of the device) and holding the HIPD 642. In the third AR system 600c, the wrist-wearable device 626, the MR device 632, and/or the HIPD 642 are used to interact within an MR environment, such as a VR game or other MR/VR application. While the MR device 632 presents a representation of a VR game (e.g., first MR game environment 620) to the user 602, the wrist-wearable device 626, the MR device 632, and/or the HIPD 642 detect and coordinate one or more user inputs to allow the user 602 to interact with the VR game.

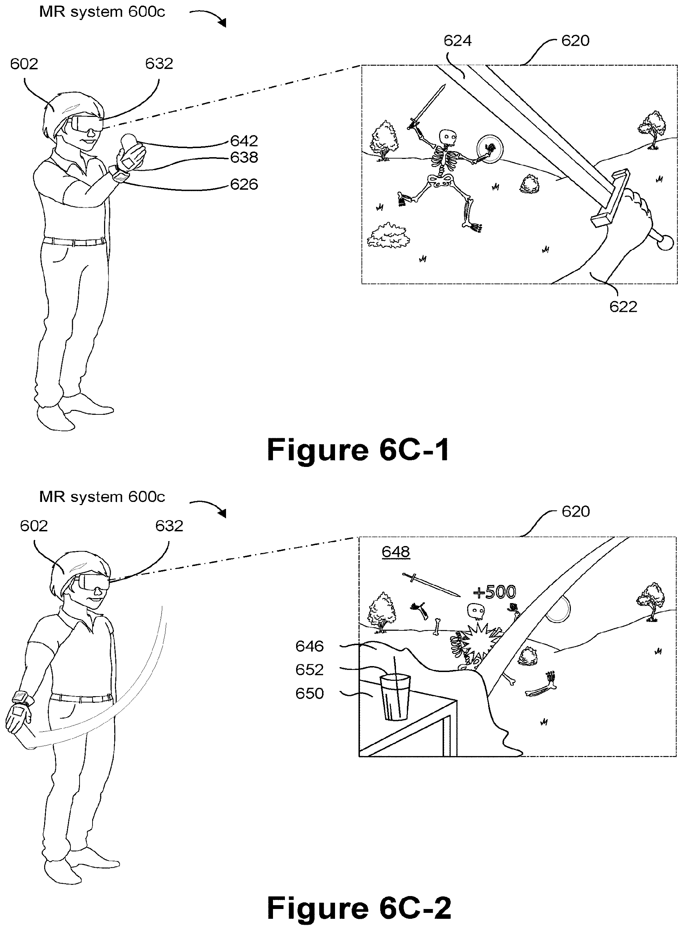

In some embodiments, the user 602 can provide a user input via the wrist-wearable device 626, the MR device 632, and/or the HIPD 642 that causes an action in a corresponding MR environment. For example, the user 602 in the third MR system 600c (shown in Figure 6C-1) raises the HIPD 642 to prepare for a swing in the first MR game environment 620. The MR device 632, responsive to the user 602 raising the HIPD 642, causes the MR representation of the user 622 to perform a similar action (e.g., raise a virtual object, such as a virtual sword 624). In some embodiments, each device uses respective sensor data and/or image data to detect the user input and provide an accurate representation of the user 602's motion. For example, image sensors (e.g., SLAM cameras or other cameras) of the HIPD 642 can be used to detect a position of the HIPD 642 relative to the user 602's body such that the virtual object can be positioned appropriately within the first MR game environment 620; sensor data from the wrist-wearable device 626 can be used to detect a velocity at which the user 602 raises the HIPD 642 such that the MR representation of the user 622 and the virtual sword 624 are synchronized with the user 602's movements; and image sensors of the MR device 632 can be used to represent the user 602's body, boundary conditions, or real-world objects within the first MR game environment 620.

In Figure 6C-2, the user 602 performs a downward swing while holding the HIPD 642. The user 602's downward swing is detected by the wrist-wearable device 626, the MR device 632, and/or the HIPD 642 and a corresponding action is performed in the first MR game environment 620. In some embodiments, the data captured by each device is used to improve the user's experience within the MR environment. For example, sensor data of the wrist-wearable device 626 can be used to determine a speed and/or force at which the downward swing is performed and image sensors of the HIPD 642 and/or the MR device 632 can be used to determine a location of the swing and how it should be represented in the first MR game environment 620, which, in turn, can be used as inputs for the MR environment (e.g., game mechanics, which can use detected speed, force, locations, and/or aspects of the user 602's actions to classify a user's inputs (e.g., user performs a light strike, hard strike, critical strike, glancing strike, miss) or calculate an output (e.g., amount of damage)).

Figure 6C-2 further illustrates that a portion of the physical environment is reconstructed and displayed at a display of the MR device 632 while the MR game environment 620 is being displayed. In this instance, a reconstruction of the physical environment 646 is displayed in place of a portion of the MR game environment 620 when object(s) in the physical environment are potentially in the path of the user (e.g., a collision with the user and an object in the physical environment are likely). Thus, this example MR game environment 620 includes (i) an immersive VR portion 648 (e.g., an environment that does not have a corollary counterpart in a nearby physical environment) and (ii) a reconstruction of the physical environment 646 (e.g., table 650 and cup 652). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 626, the MR device 632, and/or the HIPD 642 are described as detecting user inputs, in some embodiments, user inputs are detected at a single device (with the single device being responsible for distributing signals to the other devices for performing the user input). For example, the HIPD 642 can operate an application for generating the first MR game environment 620 and provide the MR device 632 with corresponding data for causing the presentation of the first MR game environment 620, as well as detect the user 602's movements (while holding the HIPD 642) to cause the performance of corresponding actions within the first MR game environment 620. Additionally or alternatively, in some embodiments, operational data (e.g., sensor data, image data, application data, device data, and/or other data) of one or more devices is provided to a single device (e.g., the HIPD 642) to process the operational data and cause respective devices to perform an action associated with processed operational data.

In some embodiments, the user 602 can wear a wrist-wearable device 626, wear an MR device 632, wear smart textile-based garments 638 (e.g., wearable haptic gloves), and/or hold an HIPD 642 device. In this embodiment, the wrist-wearable device 626, the MR device 632, and/or the smart textile-based garments 638 are used to interact within an MR environment (e.g., any AR or MR system described above in reference to Figures 6A-6B). While the MR device 632 presents a representation of an MR game (e.g., second MR game environment 620) to the user 602, the wrist-wearable device 626, the MR device 632, and/or the smart textile-based garments 638 detect and coordinate one or more user inputs to allow the user 602 to interact with the MR environment.

In some embodiments, the user 602 can provide a user input via the wrist-wearable device 626, an HIPD 642, the MR device 632, and/or the smart textile-based garments 638 that causes an action in a corresponding MR environment. In some embodiments, each device uses respective sensor data and/or image data to detect the user input and provide an accurate representation of the user 602's motion. While four different input devices are shown (e.g., a wrist-wearable device 626, an MR device 632, an HIPD 642, and a smart textile-based garment 638) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 638) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 638 can be used in conjunction with an MR device and/or an HIPD 642.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A head-wearable device, comprising:
a larger battery;
a smaller battery;
one or more electronic components; and
memory including executable instructions for:
in response to a request to perform a computational task:
in accordance with a determination that a larger battery charge of the larger battery is above a larger battery charge threshold and a smaller battery charge of the smaller battery is above a smaller battery charge threshold, providing power from the larger battery and the smaller battery to the one or more electronic components while the computational task is performed; and
in accordance with a determination that the larger battery charge of the larger battery is above the larger battery charge threshold and the smaller battery charge of the smaller battery is below the smaller battery charge threshold:
deactivating a discharging path of the smaller battery; and
providing power from the larger battery to the one or more electronic components while the computational task is performed.

2. The head-wearable device of claim 1, wherein:
the memory further includes executable instructions for:
in accordance with a determination that the larger battery charge of the larger battery is below the larger battery charge threshold and the smaller battery charge of the smaller battery is above the smaller battery charge threshold:
deactivating a discharging path of the larger battery; and
providing power from the smaller battery to the one or more electronic components while the computational task is performed.

3. The head-wearable device of claim 1 or 2, wherein:
the memory further includes executable instructions for:
after the computational task is performed:
in accordance with a determination that the larger battery charge of the larger battery is above a larger battery idle charge threshold, activating a discharging path of the larger battery;
in accordance with a determination that the larger battery charge of the larger battery is below the larger battery idle charge threshold, deactivating the discharging path of the larger battery;
in accordance with a determination that the smaller battery charge of the smaller battery is above a smaller battery idle charge threshold, activating the discharging path of the smaller battery; and
in accordance with a determination that the smaller battery charge of the smaller battery is below the smaller battery idle charge threshold, deactivating the discharging path of the smaller battery.

4. The head-wearable device of any one of the preceding claims, wherein:
the memory further includes executable instructions for:
in accordance with a determination that the larger battery charge of the larger battery is below the larger battery charge threshold and the smaller battery charge of the smaller battery is below the smaller battery charge threshold, causing the computational task to not be performed;
and/or wherein:
the larger battery charge threshold is based on one or more of:
the computational task;
a temperature of the larger battery; and
a temperature of the head-wearable device; and
the smaller battery charge threshold is based on one or more of:
the computational task;
a temperature of the smaller battery; and
a temperature of the head-wearable device.

5. The head-wearable device of any one of the preceding claims, wherein:
the memory further includes executable instructions for:
in response to a request to perform another computational task, distinct from the computational task:
in accordance with a determination that the larger battery charge of the larger battery is above another larger battery charge threshold, distinct from the larger battery charger threshold, and the smaller battery charge of the smaller battery is above another smaller battery charge threshold, distinct from the smaller battery charge threshold, providing power from the larger battery and the smaller battery to the one or more electronic components while the computational task is performed; and
in accordance with a determination that the larger battery charge of the larger battery is above the other larger battery charge threshold and the smaller battery charge of the smaller battery is below the other smaller battery charge threshold:
deactivating a discharging path of the smaller battery; and
providing power from the larger battery to the one or more electronic components while the other computational task is performed.

6. The head-wearable device of any one of the preceding claims, further comprising:
a first charging path regulator, electrically coupled to the larger battery, comprising one or more transistors, wherein the first charging path regulator is configured to activate and deactivate the discharging path of the larger battery; and
a second charging path regulator, electrically coupled to the smaller battery, comprising one or more transistors, wherein the second charging path regulator is configured to activate and deactivate the discharging path of the smaller battery.

7. The head-wearable device of any one of the preceding claims, wherein the head-wearable device further comprises:
a first temple arm portion; and
a second temple arm portion, wherein:
the larger battery is configured to be housed within the first temple arm portion, the larger battery having a first shape;
the smaller battery is configured to be housed within the second temple arm portion, the smaller battery having a second shape, distinct from the first shape;
and/or wherein:
a maximum capacity of the smaller battery is between 200 mWh and 500 mWh; and
a maximum capacity of the larger battery is between 300 mWh and 1000 mWh;
and/or wherein the head-wearable device is one of an XR headset and a pair of smart glasses;
and/or wherein the one or more electronic components is at least one of a sensor, a camera, a computing device, a system-on-chip (SOC), a memory storage device, a double data rate synchronous dynamic random-access memory (DDR SRAM), an XR processing device, a display device, an audio device, a communications device, a power management integrated circuit (PMIC), and an audio amplifier circuit.

8. A non-transitory, computer-readable storage medium including executable instructions that, when executed by one or more processors, cause the one or more processors to:
in response to a request to perform a computational task at a head-wearable device including at least a larger battery, a smaller battery, and one or more electronic components:
in accordance with a determination that a larger battery charge of the larger battery is above a larger battery charge threshold and a smaller battery charge of the smaller battery is above a smaller battery charge threshold, cause power to be provided from the larger battery and the smaller battery to the one or more electronic components while the computational task is performed; and
in accordance with a determination that the larger battery charge of the larger battery is above the larger battery charge threshold and the smaller battery charge of the smaller battery is below the smaller battery charge threshold:
cause a discharging path of the smaller battery to be deactivated; and
cause power to be provided from the larger battery to the one or more electronic components while the computational task is performed.

9. The non-transitory, computer-readable storage medium of claim 8, wherein the executable instructions that further cause the one or more processors to:
in accordance with a determination that the larger battery charge of the larger battery is below the larger battery charge threshold and the smaller battery charge of the smaller battery is above the smaller battery charge threshold:
cause a discharging path of the larger battery to be deactivated; and
cause power to be provided from the smaller battery to the one or more electronic components while the computational task is performed.

10. The non-transitory, computer-readable storage medium of claim 8 or 9, wherein the executable instructions that further cause the one or more processors to:
after the computational task is performed:
in accordance with a determination that the larger battery charge of the larger battery is above a larger battery idle charge threshold, cause a discharging path of the larger battery to be activated;
in accordance with a determination that the larger battery charge of the larger battery is below the larger battery idle charge threshold, cause the discharging path of the larger battery to be deactivated;
in accordance with a determination that the smaller battery charge of the smaller battery is above a smaller battery idle charge threshold, cause the discharging path of the smaller battery to be activated; and
in accordance with a determination that the smaller battery charge of the smaller battery is below the smaller battery idle charge threshold, cause the discharging path of the smaller battery to be deactivated.

11. The non-transitory, computer-readable storage medium of any one of claims 8 to 10, wherein the executable instructions that further cause the one or more processors to:
in accordance with a determination that the larger battery charge of the larger battery is below the larger battery charge threshold and the smaller battery charge of the smaller battery is below the smaller battery charge threshold, causing the computational task to not be performed;
and/or wherein the larger battery charge threshold is based on one or more of:
the computational task;
a temperature of the larger battery; and
a temperature of the head-wearable device; and
the smaller battery charge threshold is based on one or more of:
the computational task;
a temperature of the smaller battery; and
a temperature of the head-wearable device.

12. A method comprising:
in response to a request to perform a computational task at a head-wearable device including at least a larger battery, a smaller battery, and one or more electronic components:
in accordance with a determination that a larger battery charge of the larger battery is above a larger battery charge threshold and a smaller battery charge of the smaller battery is above a smaller battery charge threshold, providing power from the larger battery and the smaller battery to the one or more electronic components while the computational task is performed; and
in accordance with a determination that the larger battery charge of the larger battery is above the larger battery charge threshold and the smaller battery charge of the smaller battery is below the smaller battery charge threshold:
deactivating a discharging path of the smaller battery; and
providing power from the larger battery to the one or more electronic components while the computational task is performed.

13. The method of claim 12, further comprising:
in accordance with a determination that the larger battery charge of the larger battery is below the larger battery charge threshold and the smaller battery charge of the smaller battery is above the smaller battery charge threshold:
deactivating a discharging path of the larger battery; and
providing power from the smaller battery to the one or more electronic components while the computational task is performed.

14. The method of claim 12 or 13, further comprising:
after the computational task is performed:
in accordance with a determination that the larger battery charge of the larger battery is above a larger battery idle charge threshold, activating a discharging path of the larger battery;
in accordance with a determination that the larger battery charge of the larger battery is below the larger battery idle charge threshold, deactivating the discharging path of the larger battery;
in accordance with a determination that the smaller battery charge of the smaller battery is above a smaller battery idle charge threshold, activating the discharging path of the smaller battery; and
in accordance with a determination that the smaller battery charge of the smaller battery is below the smaller battery idle charge threshold, deactivating the discharging path of the smaller battery.

15. The method of any one of claims 12 to 14, further comprising:
in accordance with a determination that the larger battery charge of the larger battery is below the larger battery charge threshold and the smaller battery charge of the smaller battery is below the smaller battery charge threshold, causing the computational task to not be performed.
